# EUROPÄISCHE PATENTSCHRIFT

(11) **EP 4 554 751 B1**
(45) Veröffentlichungstag und Bekanntmachung des Hinweises auf die Patenterteilung: **10.06.2026**
(21) Anmeldenummer: 23748219.5
(22) Anmeldetag: 11.07.2023
(51) Int. Cl.: B23Q 17/09

(54) **LÄNGENEINSTELLVORRICHTUNG ZU EINER EINSTELLUNG EINER LÄNGSPOSITION EINES WERKZEUGS, WERKZEUGSPANNGERÄT UND SYSTEM UND VERFAHREN MIT DER LÄNGENEINSTELLVORRICHTUNG**
LENGTH-ADJUSTMENT DEVICE FOR ADJUSTING A LONGITUDINAL POSITION OF A TOOL, TOOL CLAMPING APPARATUS, AND SYSTEM AND METHOD HAVING THE LENGTH-ADJUSTMENT DEVICE
DISPOSITIF DE RÉGLAGE DE LONGUEUR POUR RÉGLER UNE POSITION LONGITUDINALE D'UN OUTIL, APPAREIL DE SERRAGE D'OUTIL, ET SYSTÈME ET PROCÉDÉ COMPRENANT LE DISPOSITIF DE RÉGLAGE DE LONGUEUR

(30) Priorität: 11.07.2022 DE 102022117257
(43) Veröffentlichungstag der Anmeldung: 21.05.2025
(73) Patentinhaber: E. Zoller GmbH & Co. KG Einstell- und Messgeräte, 74385 Pleidelsheim (DE)
(72) Erfinder: ZOLLER, Alexander, 74385 Pleidelsheim (DE); WÜRTENBERGER, Christoph, 70378 Stuttgart (DE); PFAU, Christian, 74379 Ingersheim (DE)
(74) Vertreter: Daub, Thomas
(86) Internationale Anmeldenummer: PCT/EP2023/069213
(87) Internationale Veröffentlichungsnummer: WO 2024/013185

(56) Entgegenhaltungen:
- EP-A1- 3 720 246
- DE-A1- 10 226 994
- FR-B1- 2 838 072

## Beschreibung

### Stand der Technik

Die Erfindung betrifft eine Längeneinstellvorrichtung zumindest zu einer Einstellung einer Längsposition eines Werkzeugs in einer Werkzeugaufnahmeöffnung einer Werkzeugaufnahme nach dem Oberbegriff des Anspruchs 1, ein Werkzeugspanngerät nach Anspruch 13, ein System nach Anspruch 14 und ein Verfahren zu einer Einstellung einer Längsposition eines Werkzeugs in einer Werkzeugaufnahmeöffnung einer Werkzeugaufnahme nach Anspruch 15.

Aus der vor dem 11.07.2022 durch die Firma E. ZOLLER GmbH & Co. KG Einstell- und Messgeräte produzierten und vertriebenen Version des universellen Einstell- und Messgeräts mit integriertem Werkzeugschrumpfsystem "redomatic" ist bereits eine Längeneinstellvorrichtung zu einer Einstellung einer Längsposition eines Werkzeugs in einer Werkzeugaufnahmeöffnung einer Werkzeugaufnahme, mit zumindest einem wechselbaren Anschlagelement zu einer mechanischen Festlegung der Längsposition des Werkzeugs in der Werkzeugaufnahmeöffnung, mit einem längsbeweglich gelagerten Anschlagaufnahmeelement zu einer Aufnahme des Anschlagelements, und mit einer Koppeleinheit, welche zu einer, insbesondere zumindest im Wesentlichen spielfreien, lösbaren Kopplung zwischen dem Anschlagelement und dem Anschlagaufnahmeelement entlang einer Längsachse der Längeneinstellvorrichtung vorgesehen ist, bekannt.

Die Aufgabe der Erfindung besteht insbesondere darin, eine gattungsgemäße Vorrichtung mit verbesserten Eigenschaften hinsichtlich einer Einstellung einer Längsposition eines Werkzeugs in einer Werkzeugaufnahmeöffnung, insbesondere hinsichtlich einer Kopplung von Längeneinstellpins mit einem Axialantrieb in einer Längeneinstellvorrichtung, bereitzustellen. Die Aufgabe wird erfindungsgemäß durch die Merkmale der Patentansprüche 1 und 13 bis 15 gelöst, während vorteilhafte Ausgestaltungen und Weiterbildungen der Erfindung den Unteransprüchen entnommen werden können.

### Vorteile/ Offenbarung der Erfindung

Die Erfindung geht aus von einer Längeneinstellvorrichtung zu einer Einstellung einer Längsposition eines Werkzeugs in einer Werkzeugaufnahmeöffnung einer Werkzeugaufnahme, mit zumindest einem wechselbaren Anschlagelement zu einer mechanischen Festlegung der Längsposition des Werkzeugs in der Werkzeugaufnahmeöffnung, mit einem längsbeweglich gelagerten Anschlagaufnahmeelement zu einer Aufnahme des Anschlagelements, insbesondere mittels einer das Anschlagelement teilweise aufnehmenden Aufnahmeausnehmung oder mittels eines, eine anziehende magnetische Kraft auf das Anschlagelement auswirkenden Magnetelements, und mit einer Koppeleinheit, welche zu einer, insbesondere zumindest im Wesentlichen spielfreien, lösbaren Kopplung zwischen dem Anschlagelement und dem Anschlagaufnahmeelement entlang einer Längsachse der Längeneinstellvorrichtung vorgesehen ist.

Es wird vorgeschlagen, dass die Koppeleinheit eine Wechselposition, in welcher eine Entnahme und ein Einführen des Anschlagelements zu einem Herstellen oder Lösen der Kopplung zwischen dem Anschlagelement und dem Anschlagaufnahmeelement, sowie insbesondere einem Führungselement, welches zumindest dazu vorgesehen ist, eine Längsbewegung des Anschlagaufnahmeelements zu führen, ermöglicht ist, und eine Fixierposition, in welcher das Anschlagelement und das Anschlagaufnahmeelement, sowie insbesondere das Führungselement, fest miteinander gekoppelt sind, aufweist, wobei die Wechselposition entlang der Längsachse ortsfest ist und wobei die Fixierposition entlang der Längsachse verschiebbar ist.

Vorteilhaft kann ein einfacher und fehlerfreier Wechsel des Anschlagelements durchgeführt werden. Vorteilhaft kann ein besonders schneller Wechsel des Anschlagelements erfolgen. Vorteilhaft ist ein werkzeugloser Wechsel des Anschlagelements möglich. Besonders vorteilhaft kann durch die entlang der Längsachse verschiebbare Fixierposition eine Längsrichtung besonders genau eingestellt werden.

Vorzugsweise ist die Längeneinstellvorrichtung dazu vorgesehen, ein bestehendes Spannsystem, insbesondere für marktübliche Universalspindeln, nachzurüsten, weshalb der Bauraum der Längeneinstellvorrichtung einen Durchmesser von weniger als 8 mm aufweisen muss. Insbesondere müssten bei einer Vergrößerung dieses Bauraums der Längeneinstellvorrichtung auf mehr als 8 mm ein Großteil der marktüblichen Spannsysteme konstruktiv aufwändig angepasst werden.

Vorzugsweise soll die Längeneinstellvorrichtung einen schnellen und/oder einfachen, insbesondere automatisierten, Wechsel von Anschlagelementen, wie Anschlagpins, z.B. für verschiedene Werkzeugaufnahmen, erlauben. Vorzugsweise sind mehrere verschiedene, insbesondere ein Satz mit sieben unterschiedlich langen und/oder unterschiedlich großen, Anschlagelementen, vorhanden, welche dazu vorgesehen sind, sehr häufig, insbesondere mehrmals täglich, im Betrieb gewechselt zu werden. Vorzugsweise ist die Längeneinstellvorrichtung von einem Handhabungsroboter bedienbar ausgebildet, welcher zumindest dazu vorgesehen ist, den Wechsel des Anschlagelements automatisch, insbesondere schnell und sicher, durchzuführen. Vorzugsweise ist die Längeneinstellvorrichtung dazu vorgesehen, eine Längsposition eines Werkzeugs in einer als Warmschrumpffutter ausgebildeten Werkzeugaufnahme, mit einer Abweichung von weniger als 1 µm von einer Soll-Längsposition, insbesondere einer Soll-Länge der Kombination von eingeschrumpftem Werkzeug und Werkzeugaufnahme, zu gewährleisten.

Vorzugsweise ist das Werkzeug als ein Schaftwerkzeug, insbesondere als ein Bearbeitungswerkzeug, insbesondere Fräs- und/oder Dreh- und/oder ein anderes Zerspanungswerkzeug, zu einer Verwendung in einer Bearbeitungsmaschine ausgebildet. Vorzugsweise ist das Werkzeug dazu vorgesehen, eine Verbindung, insbesondere Warmschrumpfverbindung, mit der Werkzeugaufnahme einzugehen. Unter einer "Werkzeugaufnahme" soll insbesondere ein Bauteil verstanden werden, welches zu einer Aufnahme eines Werkzeugs und einer Verbindung des Werkzeugs mit einer Maschine vorgesehen ist. Insbesondere ist die Werkzeugaufnahme als eine Schnittstelle zwischen Werkzeug und Maschine ausgebildet. Vorzugsweise ist die Werkzeugaufnahme als ein Werkzeugfutter, insbesondere ein Schrumpffutter, bevorzugt ein Warmschrumpffutter, oder als ein Spannfutter, wie z.B. ein Hydrodehn-Spannfutter oder ein Spannzangen-Spannfutter, ausgebildet. Vorzugsweise ist die Längeneinstellvorrichtung dazu vorgesehen, eine Längsposition des Werkzeugs in der Werkzeugaufnahmeöffnung der Werkzeugaufnahme, insbesondere hochgenau (µm), einzustellen. Vorzugsweise verläuft die Längsachse der Längeneinstellvorrichtung parallel zu der Haupterstreckungsrichtung des Anschlagaufnahmeelements und/oder fällt mit der Haupterstreckungsrichtung des Anschlagaufnahmeelements zusammen. Vorzugsweise ist die Längsposition, insbesondere bei einer vorgesehenen Verwendung und/oder Aufstellrichtung der Längeneinstellvorrichtung, in Gravitationsrichtung oberhalb der Längeneinstellvorrichtung angeordnet. Vorzugsweise begrenzt und/oder definiert das Anschlagelement die Längsposition. Vorzugsweise ist die Längsposition entlang der Längsachse, insbesondere als Verlängerung der Längsachse des Anschlagaufnahmeelements, und/oder parallel zu der Längsachse des Anschlagaufnahmeelements angeordnet. Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Unter einer "Längsposition" soll insbesondere eine Position entlang der Längsachse der Längeneinstellvorrichtung, welche durch einen Abstand, insbesondere zwischen dem Anschlagaufnahmeelement und der Werkzeugaufnahme, gebildet ist verstanden werden. Unter einer "Haupterstreckungsrichtung" eines Objekts soll dabei insbesondere eine Richtung verstanden werden, welche parallel zu einer längsten Kante eines kleinsten geometrischen Quaders verläuft, welcher das Objekt gerade noch vollständig umschließt.

Zusätzlich zu Warmschrumpffuttern könnten mit der vorgeschlagenen Längeneinstellvorrichtung auch Werkzeug-Werkzeugfutter-Kombinationen, bei denen die Schaftwerkzeuge zuerst rein linear auf Länge eingestellt und gespannt werden (Hydrodehn oder Spannzange), eingestellt werden. Vor dem Längeneinstell-Prozess wird in diesem Fall eine MMS (Minimalmengenschmierung)-Schraube zunächst ganz nach unten (damit ein Einstellhub axial frei ist) gedreht. Nach dem Längeneinstell-Prozess wird in diesem Fall die MMS-Schraube dann wieder nach oben gedreht, so dass sie vorzugsweise an ein Schaftende eines Werkzeugschafts des eingespannten Werkzeugs anliegt. Dies hat insbesondere den Hintergrund, dass vorteilhaft ein Luftölgemisch einer Minimalmengenschmierung der MMS-Schraube abgedichtet von einer Durchgangsbohrung der MMS-Schraube in ggf. vorhandene Kühlkanäle im Werkzeug übertragen werden kann.

Vorzugsweise ist das Anschlagelement als ein Stift und/oder ein Bolzen und/oder ein Stab und/oder ein Bauteil mit vergleichbarer geometrischer Form ausgebildet. Vorzugsweise weist das Anschlagelement eine zumindest im Wesentlichen zylindrische Außenkontur auf, welche zu einer Führung des Anschlagelements bei einer Längsbewegung vorgesehen ist. Das Anschlagelement könnte beispielsweise als Hohlprofil oder als Vollmaterial ausgebildet sein. Vorzugsweise ist das Anschlagelement aus einem metallischen Werkstoff und oder einem Kunststoff und oder einem Glas ausgebildet. Unter einer "Längsbewegung" soll insbesondere eine Bewegung entlang der Längsachse der Längeneinstellvorrichtung verstanden werden. Vorzugsweise weist das Anschlagelement verschiedene Ausführungen, insbesondere verschiedene Längen und/oder verschiedene Durchmesser, auf. Vorzugsweise ist das Anschlagelement austauschbar ausgebildet. Es ist denkbar, dass das Anschlagelement verstellbare Längen und/oder Durchmesser aufweist. Es ist auch denkbar, dass ein Aufnahmeelement zwei oder mehrere Enden zu einer Einstellung von zwei oder mehreren, voneinander unabhängigen Längspositionen aufweist.

Vorzugsweise ist das Anschlagaufnahmeelement als Hohlkörper, insbesondere Hohlprofil und/oder Rohr und/oder als ein Zylinder mit zumindest einer Ausnehmung, insbesondere Loch oder Sackloch, ausgebildet. Alternativ dazu kann das Anschlagaufnahmeelement auch als Vollkörper ausgebildet sein, welcher eine Anschlagfläche für das Anschlagelement bereitstellt. Vorzugsweise ist das Anschlagaufnahmeelement aus einem metallischen Werkstoff, insbesondere Stahl oder Aluminium, gebildet. Vorzugsweise ist das Anschlagaufnahmeelement dazu vorgesehen, das Anschlagelement aufzunehmen und/oder in Anschlag an dem Anschlagelement anzuliegen und insbesondere senkrecht zu der Längsrichtung zu führen. Vorzugsweise ist das Anschlagelement relativ zu dem Anschlagaufnahmeelement und/oder entlang der Längsachse der Längeneinstellvorrichtung in Längsrichtung beweglich und/oder um die Längsachse der Längeneinstellvorrichtung rotierbar gelagert. Vorzugsweise ist das Anschlagelement an und/oder oberhalb der Wechselposition relativ zu dem Anschlagaufnahmeelement, insbesondere entlang der Längsachse der Längeneinstellvorrichtung, bewegbar. Vorzugsweise ist das Anschlagelement an der Fixierposition fest mit dem Anschlagaufnahmeelement verbunden, wobei das Anschlagelement und das Anschlagaufnahmeelement unbeweglich zueinander angeordnet sind.

Vorzugsweise ist an der Wechselposition ein Wechsel des Anschlagelements, insbesondere eine Relativbewegung des Anschlagelements zu dem Anschlagaufnahmeelement, möglich. Vorzugsweise gibt die Koppeleinheit das Anschlagelement an der Wechselposition frei. Vorzugsweise sind das Anschlagelement und das Anschlagaufnahmeelement an jeder möglichen Fixierposition fest miteinander gekoppelt und/oder fix relativ zueinander positioniert. Unter "fest miteinander gekoppelt" soll insbesondere eine Verbindung, welche nicht zerstörungsfrei trennbar ist, oder welche ein Lösen einer magnetischen Anhaftung erfordert, verstanden werden. Vorzugsweise gehen die Wechselposition und die Fixierposition, insbesondere bei einer Bewegung des Anschlagelements entlang der Längsachse der Längeneinstellvorrichtung ineinander über, wenn die Koppeleinheit eine, insbesondere formschlüssige, Verbindung zwischen dem Anschlagelement und dem Anschlagaufnahmeelement oder dem Führungselement herstellt. Unter "formschlüssig" soll insbesondere verstanden werden, dass aneinanderliegende Flächen von miteinander formschlüssig verbundenen Bauteilen eine in Normalenrichtung der Flächen wirkende Haltekraft aufeinander ausüben. Insbesondere befinden sich die Bauteile in einem geometrischen Eingriff miteinander.

Ferner wird vorgeschlagen, dass alle möglichen Fixierpositionen entlang der Längsachse vollständig unterhalb der Wechselposition angeordnet sind. Vorteilhaft kann eine Kraft zu der Koppelung des Anschlagelements mit dem Anschlagaufnahmeelement reduziert werden. Vorteilhaft kann eine Fixierung des Anschlagelements durch ein Eigengewicht des Anschlagelements erfolgen. Vorteilhaft kann ein Herausfallen des Anschlagelements bei einem fehlerhaften Koppelvorgang verhindert werden. Vorteilhaft kann ein fehlerhafter Koppelvorgang verhindert werden. Unter der Wendung "unterhalb" soll insbesondere eine Position, welche sich insbesondere bei einer vorgesehenen Verwendung und/oder Aufstellrichtung der Längeneinstellvorrichtung, in Wirkrichtung der Gravitation befindet, verstanden werden. Insbesondere sind alle möglichen Fixierpositionen entlang einer Einführrichtung, in der ein Werkzeug in eine Werkzeugaufnahme eingeführt wird, gesehen vollständig unterhalb und/oder hinter der Wechselposition angeordnet. Insbesondere sind alle möglichen Fixierpositionen entlang der Längsrichtung gesehen weiter von der Werkzeugaufnahme entfernt als die Wechselposition. Unter einer "Koppelung" soll insbesondere ein Vorgang, welcher zwei separate Bauteile miteinander verbindet und/oder trennt, verstanden werden.

Des Weiteren wird vorgeschlagen, dass die Koppeleinheit zu einer Erzeugung einer Formschluss-Kopplung zwischen dem Anschlagelement und dem Anschlagaufnahmeelement bei dem Einführen des Anschlagelements in das Anschlagaufnahmeelement entlang der Längsachse vorgesehen ist. Vorteilhaft kann eine Länge und/oder ein Abstand zwischen der Längeneinstellvorrichtung und des Werkzeugs besonders genau eingestellt werden. Vorzugsweise erfolgt die Formschluss-Koppelung und/oder Entkoppelung selbsttätig, insbesondere bei Druck und/oder Zug auf/an dem in der Wechselposition positionierten Anschlagelement.

Weiterhin wird alternativ dazu vorgeschlagen, dass eine von mehreren möglichen Fixierpositionen entlang der Längsachse positionsgleich mit der Wechselposition angeordnet ist. Vorteilhaft kann eine kompakte Bauweise ermöglicht werden. Insbesondere ist eine oberste Fixierposition, vorzugsweise die Fixierposition, welche am nächsten an einer Aufnahmeöffnung des Führungselements für das Anschlagelement liegt, die Fixierposition, welche positionsgleich mit der Wechselposition angeordnet ist. Insbesondere sind alle weiteren Fixierpositionen, welche verschieden sind von der obersten Fixierposition, vollständig unterhalb der Wechselposition angeordnet.

Außerdem wird vorgeschlagen, dass die Längeneinstellvorrichtung das Führungselement aufweist, welches zumindest dazu vorgesehen ist, die Längsbewegung des Anschlagaufnahmeelements zu führen, wobei die Koppeleinheit zu einer Erzeugung einer, insbesondere zumindest teilweise formschlüssigen, Kopplung zwischen dem Anschlagelement und dem Führungselement, insbesondere zumindest in eine Richtung entlang der Längsachse, vorzugsweise zumindest in eine Auskoppelrichtung, vorgesehen ist. Dadurch kann vorteilhaft eine sichere Befestigung des Anschlagelements erreicht werden. Vorteilhaft kann eine maximale Längeneinstellung des Anschlagelements präzise festgelegt werden. Insbesondere ist die durch die Koppeleinheit erzeugte Kopplung zwischen dem Anschlagelement und dem Führungselement dazu eingerichtet ein, insbesondere zerstörungsfreies, Ausziehen / Entnehmen des Anschlagelements aus der Längeneinstellvorrichtung zu verhindern. Insbesondere erlaubt die durch die Koppeleinheit erzeugte Kopplung zwischen dem Anschlagelement und dem Führungselement eine Axialbewegung des Anschlagelements zwischen zwei Endpunkten. Insbesondere verhindert die durch die Koppeleinheit erzeugte Kopplung zwischen dem Anschlagelement und dem Führungselement eine über einen oberen Endpunkt hinausgehende Axialbewegung des Anschlagelements. Insbesondere verhindert die durch die Koppeleinheit erzeugte Kopplung zwischen dem Anschlagelement und dem Führungselement eine über einen unteren Endpunkt hinausgehende Axialbewegung des Anschlagelements. Vorzugsweise sind die Endpunkte durch das Führungselement, insbesondere durch Kanten des Führungselements und/oder durch Begrenzungen einer in das Führungselement eingebrachten Längsausnehmung/Fixierungsausnehmung ausgebildet.

Ferner wird vorgeschlagen, dass die Koppeleinheit eine maximale Quererstreckung von höchstens einem 1,5-fachen, vorzugsweise höchstens einem 1,25-fachen, einer maximalen Quererstreckung des Anschlagelements aufweist. Vorteilhaft kann die Längeneinstellvorrichtung besonders kompakt ausgeführt sein. Vorteilhaft kann eine Koppelung auch bei einem besonders kleinen / stark beschränkten Bauraum durchgeführt werden. Vorzugsweise ist die Quererstreckung des Aufnahmeelements in alle Richtungen, senkrecht zu der Haupterstreckungsrichtung, zumindest im Wesentlichen gleich groß. Unter einer "Quererstreckung" soll insbesondere eine Erstreckung senkrecht zu der Haupterstreckungsrichtung des Anschlagaufnahmeelements und/oder senkrecht zu der Längsachse verstanden werden.

Des Weiteren wird vorgeschlagen, dass die Koppeleinheit eine maximale Quererstreckung von höchstens 8 mm aufweist. Vorteilhaft kann die Längeneinstellvorrichtung besonders kompakt ausgeführt sein. Vorteilhaft kann eine Koppelung auch bei einem besonders kleinen / stark beschränkten Bauraum durchgeführt werden. Vorteilhaft kann eine bestehende Konstruktion mit der Koppeleinheit nachgerüstet werden.

Ferner wird vorgeschlagen, dass die Koppeleinheit zumindest ein getrennt von dem Anschlagelement und getrennt von dem Anschlagaufnahmeelement ausgebildetes Formschlusselement aufweist, welches zumindest dazu vorgesehen ist, eine formschlüssige Verbindung zu einer zumindest teilweisen Formschluss-Kopplung zwischen dem Anschlagelement und dem Anschlagaufnahmeelement herzustellen. Vorteilhaft kann eine Koppelung vereinfacht werden. Vorteilhaft kann das Anschlagelement ohne Formschlusselement ausgebildet sein. Vorteilhaft kann das Anschlagelement einfach und kostengünstig gefertigt werden. Vorzugsweise führt das Formschlusselement bei dem Koppelvorgang eine Bewegung zumindest in Radialrichtung des Anschlagelements aus. Vorzugsweise ist die formschlüssige Verbindung zu einer Kraftübertragung zwischen dem Anschlagelement und dem Anschlagaufnahmeelement, insbesondere entlang der Längsachse der Längeneinstellvorrichtung, vorgesehen, wobei die Kraftübertragung durch ein Hintergreifen des Anschlagelements und des Anschlagaufnahmeelements durch das Formschlusselement gebildet ist. Vorzugsweise ist das Formschlusselement in der Wechselposition zumindest im Wesentlichen frei, insbesondere relativ zu dem Anschlagelement und/oder relativ zu dem Anschlagaufnahmeelement, beweglich. Unter "getrennt" soll insbesondere ein separates Bauteil verstanden werden. Insbesondere kann das Formschlusselement dazu vorgesehen sein, in einem gekoppelten Zustand der Koppeleinheit innerhalb der Längsausnehmung/Fixierungsausnehmung des Führungselements bewegt zu werden. Insbesondere muss zu der Erzeugung der Bewegung des Formschlusselements in dem gekoppelten Zustand der Koppeleinheit eine Klemmkraft mit der das Formschlusselement zwischen dem Anschlagelement und einem Verschlusselement der Längeneinstellvorrichtung eingeklemmt ist überwunden werden. Insbesondere wird dabei das Formschlusselement über eine radial innenliegende Oberfläche des Verschlusselements geschoben. Insbesondere bewegt sich das Formschlusselement dabei, insbesondere bei einem Längeneinstellvorgang der Längeneinstellvorrichtung, mit dem, insbesondere auf Länge einzustellenden, Anschlagelement mit.

Des Weiteren wird vorgeschlagen, dass das Formschlusselement als Kugel oder als Federhaken ausgebildet ist. Vorzugsweise ist die Kugel aus Stahl, Glas und/oder Keramik ausgebildet. Es ist jedoch denkbar, dass die Kugel aus Kunststoff oder aus einem vergleichbaren Werkstoff gefertigt ist. Vorteilhaft kann eine besonders genaue Führung des Anschlagelements erfolgen. Vorzugsweise ist der Federhaken als ein, insbesondere federelastisches, Rastelement gebildet. Vorzugsweise ist der Federhaken aus einem Material mit elastischen Werkstoffeigenschaften, wie zum Beispiel Federstahl, gebildet. Alternativ wäre auch ein Ausführungsbeispiel mit einem Federhaken aus einem Kunststoff und/oder Gummi denkbar. Vorzugsweise ist das Formschlusselement dazu vorgesehen, ein selbsttätiges Freigeben der Formschlussverbindung in der Wechselposition zu bewirken. Es ist auch denkbar, dass das Formschlusselement als ein Drehverschluss, wie bspw. ein Bajonettverschluss ausgebildet ist.

Ferner wird vorgeschlagen, dass das Anschlagaufnahmeelement zumindest eine Koppelausnehmung zur zumindest teilweisen Aufnahme des Formschlusselements, insbesondere in einem gekoppelten und in einem entkoppelten Zustand der Koppeleinheit, aufweist. Vorteilhaft kann ein Koppelvorgang automatisch durchgeführt werden. Vorteilhaft kann ein fehlerhafter Koppelvorgang verhindert werden. Vorzugsweise ist die zumindest eine Koppelausnehmung zumindest teilweise durch das Anschlagaufnahmeelement, insbesondere umlaufend, begrenzt. Vorzugsweise ist die zumindest eine Koppelausnehmung des Anschlagaufnahmeelements als ein Loch ausgebildet. Die Koppelausnehmung des drehbeweglich gelagerten Verschlusselements kann hingegen als eine Koppelmulde, insbesondere als eine nicht durchgehende Ausnehmung oder als eine verschlossene Ausnehmung ausgebildet sein. Vorzugsweise entspricht ein Durchmesser der Koppelausnehmung zumindest im Wesentlichen einem Durchmesser des Formschlusselements, insbesondere der Kugel. Vorzugsweise entspricht die Anzahl an Koppelausnehmungen der Anzahl an Formschlusselementen.

Des Weiteren wird vorgeschlagen, dass die Längeneinstellvorrichtung das Führungselement aufweist, welches dazu vorgesehen ist, eine Längsbewegung und/oder eine Rotationsbewegung des Anschlagaufnahmeelements zu führen. Vorteilhaft kann die Längsposition besonders genau eingestellt werden. Vorzugsweise ist das Führungselement als ein Hohlkörper, insbesondere Hohlprofil und/oder Rohr ausgebildet, welches dazu vorgesehen ist, das Anschlagaufnahmeelement und/oder das Anschlagelement entlang der Längsachse der Längeneinstellvorrichtung zu führen und insbesondere eine Bewegung des Anschlagaufnahmeelements und/oder des Anschlagelements senkrecht zu der Haupterstreckungsrichtung des Anschlagaufnahmeelements zu begrenzen. Vorzugsweise ist das Führungselement fest, insbesondere kraft- und/oder formschlüssig, mit der Längeneinstellvorrichtung verbunden. Es ist auch denkbar, dass das Führungselement einstückig mit der Längeneinstellvorrichtung ausgebildet ist und/oder das Führungselement als eine Ausnehmung, insbesondere als ein Loch / Sackloch, in der Längeneinstellvorrichtung ausgebildet ist. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Zudem wird vorgeschlagen, dass das Führungselement die entlang der Längsachse erstreckte Fixierungsausnehmung aufweist, in welcher das Formschlusselement bei einem Verschieben der momentanen Fixierposition axial bewegt werden kann. Dadurch kann auf vorteilhaft einfache Weise eine verschiebbare Fixierung des Anschlagelements erreicht werden. Das Verschlusselement deckt vorzugsweise die komplette Fixierungsausnehmung radial nach außen hin ab.

Ferner wird vorgeschlagen, dass das Führungselement oder das drehbeweglich gelagerte Verschlusselement eine, insbesondere radial innenliegende, Koppelmulde aufweist, die ein zumindest temporäres Ausweichen des Formschlusselements zumindest während einem Einkoppeln und/oder einem Entkoppeln des Anschlagelements mit dem Anschlagaufnahmeelement erlaubt. Vorteilhaft kann eine Kraft zu dem Einkoppeln und/oder Entkoppeln reduziert werden. Vorteilhaft kann ein fehlerhafter Koppelvorgang verhindert werden. Vorzugsweise ist die Koppelmulde als eine Ausnehmung gebildet, welche durch das Führungselement zumindest teilweise begrenzt ist. Vorzugsweise ist die Koppelmulde als eine, insbesondere um die Längsachse der Längeneinstellvorrichtung, umlaufende Nut in dem Führungselement gebildet. Alternativ ist die Koppelmulde als Vertiefung in dem Verschlusselement ausgebildet, welche etwa gerade so groß ist, dass das Formschlusselement in ihr aufgenommen werden kann. Vorzugsweise ist die Koppelmulde in Radialrichtung des Führungselements gesehen nach innen geöffnet. Vorzugsweise ist die Koppelmulde dazu vorgesehen, das zumindest eine Formschlusselement während einem Einkoppeln und/oder einem Entkoppeln zumindest teilweise aufzunehmen. Vorzugsweise ist das temporäre Ausweichen zumindest im Wesentlichen auf die Zeit des Koppelvorgangs und/oder des Entkoppelvorgangs begrenzt. Insbesondere ist die Koppelmulde in Längsrichtung positionsfest angeordnet. Die Koppelmulde des Verschlusselements kann durch ein Drehen des Verschlusselements in Umfangsrichtung bewegt werden. Insbesondere ist das Anschlagaufnahmeelement relativ zu der Koppelmulde beweglich gelagert.

Des Weiteren wird vorgeschlagen, dass die Koppelmulde zumindest in eine, vorzugsweise parallel zu der Längsrichtung verlaufende, Einkoppelrichtung oder zumindest in eine Umfangsrichtung schräg zulaufend ausgebildet ist. Vorteilhaft kann ein fehlerhaftes Koppeln verhindert werden. Insbesondere ist der Winkel zwischen der in Einkoppelrichtung schräg zulaufenden Koppelmulde und der Längsachse kleiner als 60°, vorteilhaft kleiner 45° und bevorzugt kleiner 30° ausgebildet. Vorzugsweise ist die in Einkoppelrichtung oder in Umfangsrichtung schräg zulaufende Koppelmulde dazu vorgesehen, ein insbesondere selbsttätiges, Schließen der Formschlussverbindung zwischen dem Anschlagelement und dem Anschlagaufnahmeelement zu ermöglichen.

Außerdem wird vorgeschlagen, dass die Koppelmulde derart in dem drehbeweglich gelagerten Verschlusselement angeordnet ist, dass sie durch eine Drehbewegung des Verschlusselements wahlweise in einen zumindest teilweisen Überlapp mit einer Fixierungsausnehmung des Führungselements gebracht werden kann. Dadurch kann vorteilhaft eine einfache Betätigung der Koppeleinheit erreicht werden. Es ist denkbar, dass das drehbeweglich gelagerte Verschlusselement manuell oder durch einen (externen oder internen) radialen, vorzugsweise pneumatisch angesteuerten, Greifer gehalten oder freigegeben wird und dann mittels einer Drehung des Führungselements der Überlapp der Koppelmulde mit der Fixierungsausnehmung eingestellt wird. Alternativ kann der Greifer auch das Verschlusselement direkt drehen. Insbesondere überlappt maximal ein oberer Endbereich der Fixierungsausnehmung mit der Koppelmulde.

Ferner wird das in einer Aufnahmeausnehmung des Anschlagaufnahmeelements zumindest längsbeweglich gelagerte Verschlusselement oder ein rund um ein Führungselement der Längeneinstellvorrichtung drehbeweglich gelagertes Verschlusselement, wobei das Führungselement zumindest dazu vorgesehen ist, eine Längsbewegung des Anschlagaufnahmeelements zu führen, vorgeschlagen. Vorteilhaft kann der Koppelvorgang automatisch erfolgen. Vorzugsweise ist das längsbeweglich gelagerte Verschlusselement als ein Bolzen und/oder ein Stift gebildet. Vorzugsweise ist das drehbeweglich gelagerte Verschlusselement rohrförmig oder ringförmig ausgebildet. Vorzugsweise umgreift das drehbeweglich gelagerte Verschlusselement zumindest das Führungselement und/oder zumindest das Anschlagelement im gekoppelten Zustand umlaufend. Vorzugsweise ist das Verschlusselement dazu vorgesehen, den Koppelvorgang zu betätigen und/oder zu ermöglichen. Vorzugsweise ist die Bewegung des längsbeweglich gelagerten Verschlusselements durch das Anschlagaufnahmeelement senkrecht zu der Längsachse der Längeneinstellvorrichtung begrenzt. Unter "längsbeweglich" soll insbesondere eine Bewegung entlang der Längsachse der Längeneinstellvorrichtung verstanden werden. Vorzugsweise ist die Bewegung des drehbeweglich gelagerten Verschlusselements durch das Führungselement winkelbegrenzt, beispielsweise auf etwa 150°. Insbesondere ist das Verschlusselement getrennt von dem Anschlagaufnahmeelement ausgebildet. Insbesondere ist das längsbeweglich gelagerte Verschlusselement dazu vorgesehen, mit einem Endbereich eines gekoppelten Anschlagelements in Berührungskontakt zu stehen. Insbesondere ist das drehbeweglich gelagerte Verschlusselement in jedem Betriebszustand frei von einem Berührungskontakt mit dem Anschlagelement angeordnet.

Des Weiteren wird vorgeschlagen, dass das Verschlusselement dazu vorgesehen ist, in einem entkoppelten Zustand das Formschlusselement verliersicher zu positionieren. Vorteilhaft kann eine Funktion verbessert werden. Unter "verliersicher" soll insbesondere verstanden werden, dass das Formschlusselement an seiner Position verbleibt und insbesondere nicht herausfällt oder mit einem der angrenzenden Bauteile verklemmt. Vorzugsweise ist das Verschlusselement dazu vorgesehen, in einem entkoppelten Zustand, insbesondere in der Wechselposition, das Formschlusselement zu positionieren, insbesondere gegen ein Herausfallen zu sichern. Insbesondere ist das Verschlusselement dazu vorgesehen, das Formschlusselement in dem entkoppelten Zustand in der Koppelmulde und/oder der Koppelausnehmung zu halten.

Dabei wird vorgeschlagen, dass das Verschlusselement ein Permanentmagnetelement aufweist, welches zu der verliersicheren Positionierung des Formschlusselements in dem entkoppelten Zustand vorgesehen ist. Dadurch kann vorteilhaft eine hohe Betriebssicherheit erreicht werden. Insbesondere ist das Formschlusselement in diesem Fall aus einem magnetischen, insbesondere ferromagnetischen, Material ausgebildet. Insbesondere wird bei einer Drehung des drehbeweglich gelagerten Verschlusselements das Formschlusselement durch den Kontakt mit dem Führungselement von dem Permanentmagnetelement gelöst.

Ferner wird vorgeschlagen, dass das Verschlusselement dazu vorgesehen ist, bei einem Einkoppelvorgang zwischen dem Anschlagelement und dem Anschlagaufnahmeelement das Formschlusselement für einen Eingriff mit dem Anschlagelement zur Herstellung der zumindest teilweisen Formschluss-Kopplung freizugeben. Vorteilhaft kann ein Koppelvorgang vereinfacht werden. Vorzugsweise ist das Verschlusselement dazu vorgesehen, das Formschlusselement zu einem Öffnen und/oder Schließen, insbesondere entlang der Längsachse oder in Radialrichtung, zu bewegen. Vorzugsweise ist das Verschlusselement dazu vorgesehen, von dem Anschlagelement betätigt, insbesondere entlang der Längsachse, bewegt zu werden. Insbesondere ist das Anschlagelement dazu vorgesehen, das Verschlusselement bei dem Koppelvorgang oder im bereits gekoppelten Zustand weiter in die Aufnahmeausnehmung des Anschlagaufnahmeelements oder in der Fixierausnehmung des Führungselements zu versenken. Insbesondere gibt das längsbeweglich gelagerte Verschlusselement das Formschlusselement durch ein Ausweichen/Versenken des Verschlusselements in die Aufnahmeausnehmung des Anschlagaufnahmeelements frei.

Des Weiteren wird vorgeschlagen, dass die Längeneinstellvorrichtung ein Rückstellelement aufweist, welches zumindest dazu vorgesehen ist, bei einem Entkoppelvorgang das Formschlusselement, insbesondere mittels des Verschlusselements, und/oder das Anschlagaufnahmeelement in eine einkoppelbereite Ausgangslage zurückzustellen. Vorteilhaft kann eine Funktionssicherheit gewährleistet werden. Vorzugsweise ist das Rückstellelement als ein elastisch und/oder viskoelastisch verformbares Bauteil ausgebildet. Vorzugsweise erfolgt eine Rückstellbewegung durch eine, insbesondere elastische und/oder viskoelastische, Rückverformung des Rückstellelements. Vorzugsweise ist eine Rückstellkraft des Rückstellelements zumindest im Wesentlichen größer als eine Gewichtskraft des Verschlusselements und/oder des Anschlagaufnahmeelements und zumindest im Wesentlichen kleiner als eine Gewichtskraft von dem Rückstellelement und/oder dem Anschlagelement. Vorzugsweise erfolgt die Rückstellbewegung durch Wegnahme der Gewichtskraft von dem Anschlagelement. Es ist auch denkbar, dass die Rückstellbewegung durch einen, insbesondere pneumatischen und/oder hydraulischen, fluidischen Druck erfolgt. Insbesondere positioniert das Verschlusselement in der einkoppelbereiten Ausgangslage das Formschlusselement verliersicher.

Ferner wird vorgeschlagen, dass das Rückstellelement als eine an einem Endbereich einer Aufnahmeausnehmung des Anschlagaufnahmeelements und/oder einer Aufnahmeausnehmung einer das Anschlagaufnahmeelement lagernden Basisstange abgestützte Druckfeder ausgebildet ist. Vorteilhaft kann der Koppelmechanismus verbessert werden. Vorzugsweise ist die Aufnahmeausnehmung als ein Loch und/oder eine zumindest senkrecht zu der Längsachse vollständig durch das Anschlagaufnahmeelement / der Basisstange begrenzte und/oder geschlossene Ausnehmung gebildet. Vorzugsweise ist die Druckfeder als eine Schraubendruckfeder und/oder eine Tellerfeder und/oder ein elastisch verformbares Gummielement ausgebildet. Unter einem "Endbereich" soll insbesondere ein Bereich verstanden werden, welcher sich bei einem entkoppelten Zustand auf einer von dem Koppelelement entgegengesetzten Seite befindet, wobei der Endbereich an einen maximalen Abstand der Aufnahmeausnehmung zu dem Koppelelement angeordnet ist.

Des Weiteren wird vorgeschlagen, dass das Anschlagelement zumindest eine Eingriffsmulde aufweist, welche dazu vorgesehen ist, zu der Herstellung der Formschluss-Verbindung zwischen dem Anschlagelement und dem Anschlagaufnahmeelement oder dem Führungselement einen Eingriff mit dem Formschlusselement herzustellen. Vorteilhaft kann eine stabile Verbindung sichergestellt werden. Vorzugsweise entspricht die Eingriffsmulde zumindest im Wesentlichen dem Negativ der Form des Formschlusselements. Vorzugsweise stellt die Eingriffsmulde ein zu dem Formschlusselement korrespondierendes Formschlusselement dar. Vorzugsweise weist das Anschlagaufnahmeelement die gleiche Anzahl an Eingriffsmulden auf wie Formschlusselemente. In einer alternativen Ausführungsform könnte die Eingriffsmulde um das Anschlagelement herum umlaufend ausgebildet sein. Vorzugsweise begrenzt das Anschlagelement die Koppelmulde und/oder Koppelmulden.

Ferner wird vorgeschlagen, dass das Anschlagelement zumindest ein weiteres Formschlusselement aufweist, welches dazu vorgesehen ist, ein Drehmoment von dem Anschlagaufnahmeelement aufzunehmen und/oder an das Anschlagaufnahmeelement zu übertragen. Vorteilhaft kann ein fehlerfreier Koppelvorgang erfolgen. Vorzugsweise ist das weitere Formschlusselement dazu vorgesehen, einen Formschluss mit einem korrespondierenden weiteren Formschlusselement des Anschlagaufnahmeelements zu bilden. Vorzugsweise ist das weitere Formschlusselement als ein Außensechskant ausgebildet. Vorzugsweise ist das korrespondierende weitere Formschlusselement des Anschlagaufnahmeelements als Innensechskant ausgebildet. Es ist denkbar, dass das Formschlusselement als ein Dreikant oder ein Vierkant oder ein Mehrkant oder ein polygonförmiges oder ein vergleichbares zur Herstellung einer Formschlussverbindung ausgebildetes Element ausgebildet ist.

Eine weitere mögliche Anwendung der Längeneinstellvorrichtung betrifft eine Längeneinstellung von Werkzeugen rein über Einstell- oder MMS-Schrauben von Spannfuttern. In diesem Fall wird lediglich die Rotationsfunktion der Längeneinstellvorrichtung zu einer Erleichterung eines Einführens des Pins in einen Innensechskant einer Einstell- oder MMS-Schraube der entsprechenden Werkzeugaufnahme verwendet. Vorteilhaft bildet die Längeneinstellvorrichtung eine Art Universalgenie für nahezu alle in der Industrie bekannten Längeneinstellmethoden von Werkzeugen, insbesondere über ein und dieselbe Schnittstelle. Durch die Ausbildung des korrespondierenden weiteren Formschlusselements des Anschlagaufnahmeelements als Innensechskant (Inbus) kann vorteilhaft zum einen eine relativ große Lagefreiheit zum Wechseln von Anschlagelementen und zum anderen eine Übertragung eines relativ großen Drehmoments ermöglicht werden.

Des Weiteren wird vorgeschlagen, dass das Anschlagelement auf einem dem Anschlagaufnahmeelement zugewandten Ende eine Kugelkappe aufweist. Vorteilhaft kann eine Montage vereinfacht werden. Vorzugsweise ist die Kugelkappe dazu vorgesehen, das Einführen des Anschlagelements in das Anschlagaufnahmeelement zu vereinfachen. Es wäre auch denkbar, dass die Kugelkappe als Kegel und/oder als, insbesondere treppenförmiger, Absatz und/oder als eine Fase ausgebildet ist.

Ferner wird vorgeschlagen, dass das Anschlagaufnahmeelement und/oder eine das Anschlagaufnahmeelement lagernde Basisstange rotationsbeweglich gelagert ist. Vorteilhaft kann ein Koppelvorgang zwischen dem Anschlagelement und dem Anschlagaufnahmeelement vereinfacht werden. Vorzugsweise ist die Rotationsbewegung dazu vorgesehen, ein Einkoppeln, insbesondere ein Herstellen der Formschlussverbindung zwischen dem Formschlusselement und der Eingriffsmulde zu vereinfachen.

Des Weiteren wird ein Werkzeugspanngerät, insbesondere ein Schrumpfspanngerät, mit einer Längeneinstellvorrichtung vorgeschlagen. Vorteilhaft kann eine besonders genaue Positionierung von dem Werkzeug in der Werkzeugaufnahme erfolgen. Insbesondere umfasst das Schrumpfspanngerät zumindest eine Induktionsheizeinheit zu einer temporären thermischen Aufweitung einer Werkzeugaufnahmeöffnung der Werkzeugaufnahme.

Ferner wird ein System mit dem Werkzeugspanngerät und mit einem Handhabungsroboter vorgeschlagen, wobei der Handhabungsroboter zu einem automatisierten Wechsel des Anschlagelements, insbesondere mittels einer reinen Linearbewegung, vorgesehen ist. Vorteilhaft können Kosten reduziert werden. Alternativ ist es auch denkbar, dass der Wechsel des Anschlagelements manuell, insbesondere von Hand durch einen Menschen, erfolgt.

Des Weiteren wird ein Verfahren zu einer Koppelung eines Anschlagelements mit einem Anschlagaufnahmeelement in einer Längeneinstellvorrichtung vorgeschlagen, wobei das Anschlagelement und das Anschlagaufnahmeelement in einem Koppelschritt an einer ortsfesten Wechselposition gekoppelt werden, welche oberhalb aller Fixierpositionen liegt, in welchen das Anschlagelement und das Anschlagaufnahmeelement zerstörungsfrei untrennbar miteinander verbunden sind. Vorteilhaft kann ein besonders schneller Wechsel des Anschlagelements erfolgen. Vorteilhaft ist ein werkzeugloser Wechsel des Anschlagelements möglich.

Außerdem wird alternativ vorgeschlagen, dass in dem Verfahren das Anschlagelement und das Anschlagaufnahmeelement in einem Koppelschritt an einer ortsfesten Wechselposition gekoppelt werden, welche axial positionsgleich mit einer von mehreren verschiedenen Fixierpositionen liegt, in welchen das Anschlagelement und das Führungselement, welches zumindest dazu vorgesehen ist, die Längsbewegung des Anschlagaufnahmeelements zu führen, zerstörungsfrei untrennbar miteinander verbunden sind. Vorteilhaft kann eine betriebssichere und/oder präzise Längeneinstellung ermöglicht werden.

Die erfindungsgemäße Längeneinstellvorrichtung, das erfindungsgemäße Werkzeugspanngerät, das erfindungsgemäße System und das erfindungsgemäße Verfahren sollen hierbei nicht auf die oben beschriebene Anwendung und Ausführungsform beschränkt sein. Insbesondere kann die erfindungsgemäße Längeneinstellvorrichtung, das erfindungsgemäße Werkzeugspanngerät, das erfindungsgemäße System und das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen sind drei Ausführungsbeispiele der Erfindung dargestellt. Die Zeichnungen, die Beschreibung und die Ansprüche enthalten zahlreiche Merkmale in Kombination.

Es zeigen:
- Fig. 1: eine schematische perspektivische Darstellung eines Systems mit einem eine Längeneinstellvorrichtung aufweisenden Werkzeugspanngerät und mit einem Handhabungsroboter,
- Fig. 2: eine schematische vertikale Schnittansicht der Längeneinstellvorrichtung in gekoppeltem Zustand,
- Fig. 3: eine schematische vertikale Schnittansicht der Längeneinstellvorrichtung in entkoppeltem Zustand,
- Fig. 4: ein schematisches Ablaufdiagramm eines Verfahrens zu einer Koppelung eines Anschlagelements der Längeneinstellvorrichtung mit einem Anschlagaufnahmeelement der Längeneinstellvorrichtung,
- Fig. 5: eine schematische Schnittdarstellung in Längsrichtung einer alternativen Ausführungsform einer Längeneinstellvorrichtung mit Federhaken,
- Fig. 6: schematische Schnittdarstellungen in Querrichtung der alternativen Ausführungsform der Längeneinstellvorrichtung mit Federhaken,
- Fig. 7: eine schematische vertikale Schnittansicht einer weiteren alternativen Längeneinstellvorrichtung in einem gekoppelten Zustand (Anschlagelement verriegelt),
- Fig. 8: die schematische vertikale Schnittansicht der weiteren alternativen Längeneinstellvorrichtung in dem gekoppelten Zustand bei einer weiteren Fixierposition (Anschlagelement verriegelt),
- Fig. 9: eine schematische vertikale Schnittansicht der weiteren alternativen Längeneinstellvorrichtung in einem entkoppelten Zustand (Anschlagelement gelöst),
- Fig. 10: eine schematische Schnittdarstellung in Querrichtung der weiteren alternativen Ausführungsform der Längeneinstellvorrichtung entlang der in der Fig. 7 angedeuteten Schnittachse I und
- Fig. 11: eine schematische Schnittdarstellung in Querrichtung der weiteren alternativen Ausführungsform der Längeneinstellvorrichtung entlang der in der Fig. 7 angedeuteten Schnittachse II.

### Beschreibung der Ausführungsbeispiele

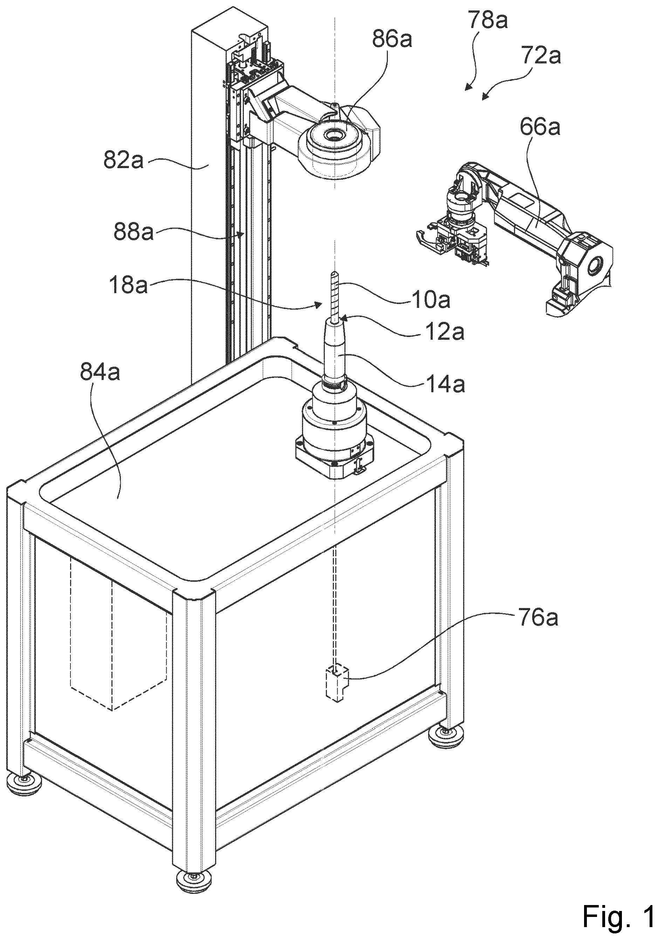

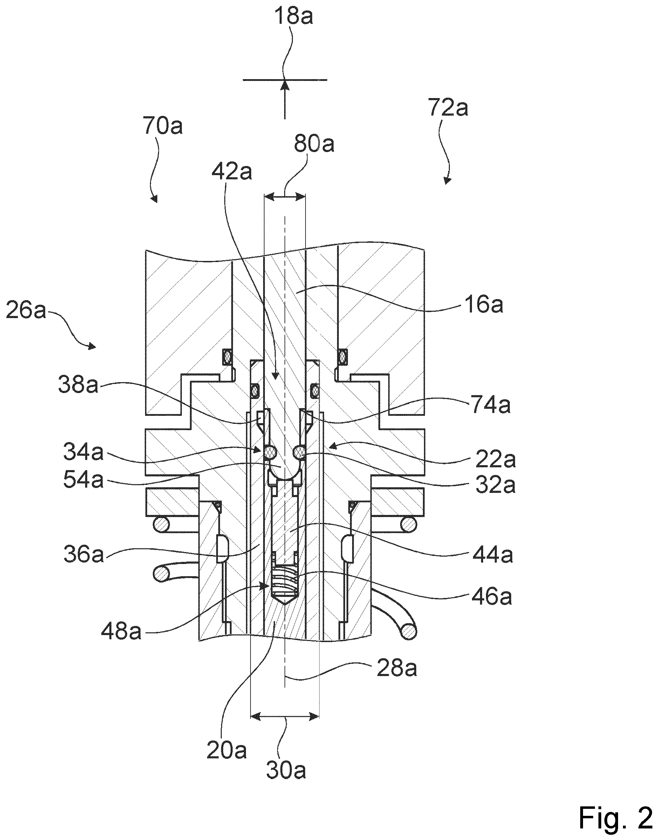

Die Figur 1 zeigt ein System mit einem Werkzeugspanngerät 78a. Das Werkzeugspanngerät 78a ist beispielhaft als ein Schrumpfspanngerät dargestellt. Das Werkzeugspanngerät 78a weist eine Längeneinstellvorrichtung 72a auf. Die Längeneinstellvorrichtung 72a ist zu einer Einstellung einer Längsposition 18a eines als Schaftwerkzeug ausgebildeten Werkzeugs 10a in einer Werkzeugaufnahmeöffnung 12a einer beispielhaft als Warmschrumpffutter ausgebildeten Werkzeugaufnahme 14a während eines Warmschrumpfprozesses vorgesehen. Das Warmschrumpffutter ist in diesem Fall als Induktionswarmschrumpffutter ausgebildet. Das Werkzeugspanngerät 78a weist eine Induktionsspule 86a auf. Die Induktionsspule 86a ist dazu vorgesehen, die Werkzeugaufnahme 14a aufzuheizen. Das Werkzeugspanngerät 78a weist einen Turm 82a auf. Der Turm 82a weist eine Schiene 88a auf. Die Induktionsspule 86a ist in der Schiene 88a zum Aufheizen der Werkzeugaufnahme 14a in vertikaler Richtung zu verfahrbar. Das System weist ein Basisgestell 84a auf. Die Längeneinstellvorrichtung 72a ist auf dem Basisgestell 84a angeordnet. Das System weist eine Antriebseinheit 76a auf. Die Antriebseinheit 76a verfährt ein Anschlagelement 16a der Längeneinstellvorrichtung 72a in vertikaler Richtung (vgl. u.a. Fig. 2). Die Antriebseinheit 76a ist zu einer Einstellung einer Längsposition 18a eines Anschlagelements 16a innerhalb der Werkzeugaufnahme 14a vorgesehen (vgl. u.a. Fig. 2). Das System weist einen Handhabungsroboter 66a auf. Der Handhabungsroboter 66a ist zu einem automatisierten Wechsel des Anschlagelements 16a, insbesondere mittels einer reinen Linearbewegung, vorgesehen. Es ist auch denkbar, dass der Werkzeugwechsel von Hand erfolgt.

Die Figur 2 zeigt eine schematische Darstellung eines Schnitts durch einen Teil einer Längeneinstellvorrichtung 72a. Die Längeneinstellvorrichtung 72a ist in einem gekoppelten Zustand 70a dargestellt. Die Längeneinstellvorrichtung 72a weist ein wechselbares Anschlagelement 16a auf. Das Anschlagelement 16a ist zu einer mechanischen Festlegung der Längsposition 18a des Werkzeugs 10a in der Werkzeugaufnahmeöffnung 12a vorgesehen. Das Anschlagelement 16a bildet einen Anschlag für ein unteres Ende eines Schafts des in die Werkzeugaufnahmeöffnung 12a bei einem Warmschrumpfvorgang eingebrachten Werkzeugs 10a aus. Die Längeneinstellvorrichtung 72a ist dazu vorgesehen, das Anschlagelement 16a in eine gewünschte / vorgesehene Position innerhalb der Werkzeugaufnahmeöffnung 12a der Werkzeugaufnahme 14a zu verbringen. Das Anschlagelement 16a ist stabförmig ausgebildet. Das Anschlagelement 16a weist eine zylindrische Außenkontur auf. Vorzugsweise entspricht eine Außenkontur zumindest eines oberen Endbereichs des Anschlagelements 16a etwa einer Innenkontur der Werkzeugaufnahmeöffnung 12a der Werkzeugaufnahme 14a. Ein Durchmesser der zylindrischen Außenkontur des Anschlagelements 16a ist sehr viel kleiner als eine Länge des Anschlagelements 16a. Das Anschlagelement 16a könnte auch eine eckige Außenkontur aufweisen. Das Anschlagelement 16a könnte beispielsweise als ein Dreikant oder als ein Vierkant ausgebildet sein. Das Anschlagelement 16a ist aus einem harten, insbesondere zumindest im Wesentlichen nicht elastisch verformbaren, Werkstoff ausgebildet. Durch ein Verfahren des Anschlagaufnahmeelements 20a entlang einer Längsrichtung des Anschlagaufnahmeelements 20a lässt sich das Anschlagelement 16a in die Werkzeugaufnahmeöffnung 12a versenken.

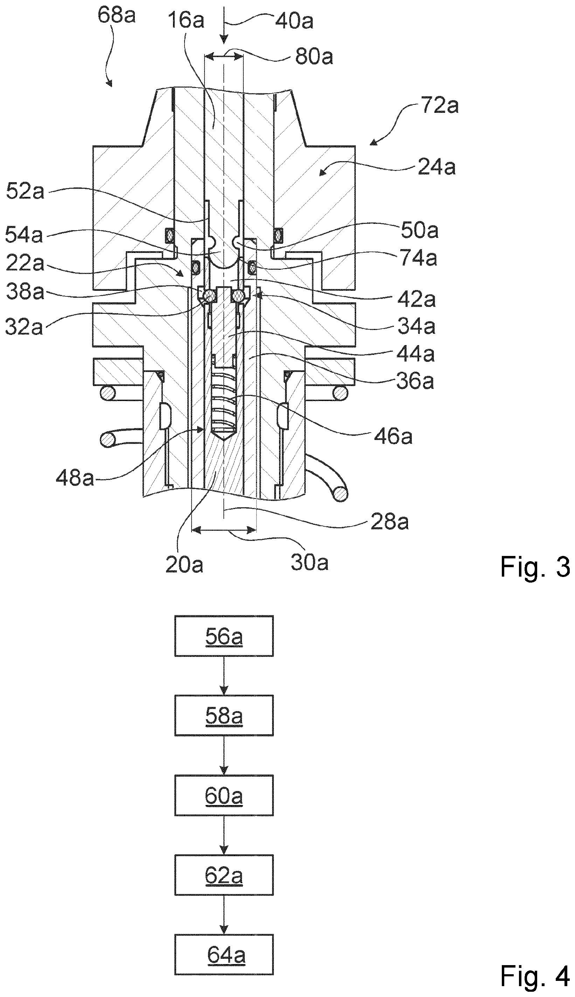

Die Längeneinstellvorrichtung 72a weist ein Anschlagaufnahmeelement 20a auf. Das Anschlagaufnahmeelement 20a ist längsbeweglich gelagert. Das Anschlagaufnahmeelement 20a ist rotierbar gelagert. Das Anschlagaufnahmeelement 20a ist zu einer Aufnahme des Anschlagelements 16a vorgesehen. Das Anschlagaufnahmeelement 20a ist zu einer Kopplung mit dem Anschlagelement 16a vorgesehen. In dem gekoppelten Zustand 70a sind das Anschlagelement 16a und das Anschlagaufnahmeelement 20a bewegungsgebunden. In einem entkoppelten Zustand 68a (vgl. Fig. 3) sind das Anschlagelement 16a und das Anschlagaufnahmeelement 20a zueinander relativbeweglich und/oder relativ zueinander rotierbar. Das Anschlagaufnahmeelement 20a weist eine Aufnahmeausnehmung 42a auf. Die Aufnahmeausnehmung 42a ist zu einer zumindest teilweisen Aufnahme des Anschlagelements 16a vorgesehen. Die Aufnahmeausnehmung 42a ist mittig in dem Anschlagaufnahmeelement 20a angeordnet. Die Aufnahmeausnehmung 42a ist als ein Loch in dem Anschlagaufnahmeelement 20a ausgebildet. Die Aufnahmeausnehmung 42a ist als ein Sackloch ausgebildet. Die Aufnahmeausnehmung 42a könnte beispielsweise auch als Durchgangsloch ausgebildet sein. Die Aufnahmeausnehmung 42a in dem Anschlagaufnahmeelement 20a verläuft in eine Längsrichtung des Anschlagaufnahmeelements 20a. Die geometrische Form der Aufnahmeausnehmung 42a entspricht der geometrischen Form eines Endbereichs 48a des Anschlagelements 16a. Das Anschlagaufnahmeelement 20a weist eine Fase 74a auf. Die Fase 74a ist dazu vorgesehen, ein Einführen des Anschlagelements 16a in das Anschlagaufnahmeelement 20a zu vereinfachen. Das Anschlagaufnahmeelement 20a ist aus einem harten, insbesondere zumindest im Wesentlichen nicht elastisch verformbaren, Werkstoff ausgebildet. Das Anschlagaufnahmeelement 20a ist angetrieben bewegbar. Das Anschlagaufnahmeelement 20a ist angetrieben längsbewegbar. Das Anschlagaufnahmeelement 20a ist angetrieben rotierbar. Das Werkzeugspanngerät 78a weist eine Antriebseinheit 76a (vgl. Fig. 1) auf, welche dazu vorgesehen ist, das Anschlagaufnahmeelement 20a in Längsrichtung zu bewegen und/oder um seine Längsachse 28a zu rotieren.

Die Längeneinstellvorrichtung 72a weist eine Koppeleinheit 22a auf. Die Koppeleinheit 22a ist zu einer spielfreien Kopplung zwischen dem Anschlagelement 16a und dem Anschlagaufnahmeelement 20a entlang der Längsachse 28a der Längeneinstellvorrichtung 72a vorgesehen. Die Koppeleinheit 22a ist zu einer lösbaren Kopplung zwischen dem Anschlagelement 16a und dem Anschlagaufnahmeelement 20a entlang einer Längsachse 28a der Längeneinstellvorrichtung 72a vorgesehen. Die Koppeleinheit 22a ist zu einer Erzeugung einer Formschluss-Kopplung zwischen dem Anschlagelement 16a und dem Anschlagaufnahmeelement 20a bei dem Einführen des Anschlagelements 16a in das Anschlagaufnahmeelement 20a entlang der Längsachse 28a vorgesehen.

Die Koppeleinheit 22a bildet eine Wechselposition 24a aus (vgl. Fig. 3). In der Wechselposition 24a ragt das Anschlagelement 16a aus der Werkzeugaufnahmeöffnung 12a oben heraus. Die Koppeleinheit 22a bildet entlang der Längsachse 28a genau eine Wechselposition 24a aus. In der Wechselposition 24a ist eine Entnahme von dem Anschlagelement 16a aus der Werkzeugaufnahme 14a und/oder aus dem Anschlagaufnahmeelement 20a möglich. In der Wechselposition 24a ist ein Einführen des Anschlagelements 16a in die Werkzeugaufnahme 14a und/oder in das Anschlagaufnahmeelement 20a möglich. Die Wechselposition 24a ist zu einem Herstellen oder Lösen der Kopplung zwischen dem Anschlagelement 16a und dem Anschlagaufnahmeelement 20a vorgesehen. Die Koppeleinheit 22a weist Formschlusselemente 32a auf. In der Wechselposition 24a können die Formschlusselemente 32a radial zu dem Anschlagaufnahmeelement 20a ausweichen. Das Ausweichen der Formschlusselemente 32a ist dazu vorgesehen, das Anschlagelement 16a freizugeben. Die Wechselposition 24a ist entlang der Längsachse 28a ortsfest. Die Koppeleinheit 22a bildet eine Fixierposition 26a aus (vgl. Fig. 2). Die Koppeleinheit 22a bildet entlang der Längsachse 28a eine Vielzahl an Fixierpositionen 26a aus. In der Fixierposition 26a sind das Anschlagelement 16a und das Anschlagaufnahmeelement 20a fest (rotationsfest und translationsfest) miteinander gekoppelt. In der Fixierposition 26a ist keine Bewegung der Formschlusselemente 32a radial zu dem Anschlagaufnahmeelement 20a möglich. Die Fixierposition 26a ist entlang der Längsachse 28a verschiebbar. Alle möglichen Fixierpositionen 26a entlang der Längsachse 28a sind (von der Werkzeugaufnahme 14a aus gesehen) vollständig unterhalb der Wechselposition 24a angeordnet.

Die Koppeleinheit 22a weist eine maximale Quererstreckung 30a von höchstens einem 1,25-fachen einer maximalen Quererstreckung 80a des Anschlagelements 16a auf. Es ist auch denkbar, dass die Koppeleinheit 22a die maximale Quererstreckung 30a von höchstens dem 1,5-fachen der maximalen Quererstreckung 80a des Anschlagelements 16a aufweist. Die Koppeleinheit 22a weist eine maximale Quererstreckung 30a von höchstens 8 mm auf. Die Koppeleinheit 22a weist mehrere getrennt von dem Anschlagelement 16a und getrennt von dem Anschlagaufnahmeelement 20a ausgebildete Formschlusselemente 32a auf. Die Formschlusselemente 32a sind als Kugeln ausgebildet. Das Formschlusselement 32a ist dazu vorgesehen, die formschlüssige Verbindung zu der Formschluss-Kopplung zwischen dem Anschlagelement 16a und dem Anschlagaufnahmeelement 20a herzustellen.

Die Figur 3 zeigt die Längeneinstellvorrichtung 72a in einem entkoppelten Zustand 68a. Die Koppeleinheit 22a der Längeneinstellvorrichtung 72a ist in der Wechselposition 24a dargestellt. Das Anschlagaufnahmeelement 20a weist Koppelausnehmungen 34a auf. Die Koppelausnehmungen 34a sind jeweils zur teilweisen Aufnahme eines der Formschlusselemente 32a, in einem gekoppelten Zustand 70a (vgl. Fig. 2) und in einem entkoppelten Zustand 68a (vgl. Fig. 3) der Koppeleinheit 22a, vorgesehen. Das Anschlagaufnahmeelement 20a weist genau gleich viele Koppelausnehmungen 34a wie Formschlusselemente 32a auf. Das Anschlagaufnahmeelement 20a könnte mehr Koppelausnehmungen 34a wie Formschlusselemente 32a aufweisen. Das Anschlagaufnahmeelement 20a weist zu dem Formschlusselement 32a korrespondierende Koppelausnehmungen 34a auf. Die Koppelausnehmungen 34a sind als runde, sich in Radialrichtung des Anschlagaufnahmeelements 20a erstreckende Durchgangslöcher in dem Anschlagaufnahmeelement 20a ausgebildet. Die Durchmesser der Koppelausnehmungen 34a entsprechen etwa den Durchmessern der jeweils zugehörigen Formschlusselemente 32a.

Die Längeneinstellvorrichtung 72a weist ein Führungselement 36a auf. Das Führungselement 36a ist als ein Hohlkörper ausgebildet. Das Führungselement 36a ist als eine Hülse ausgebildet. Der Innendurchmesser des Führungselements 36a entspricht etwa dem Außendurchmesser des Anschlagaufnahmeelements 20a. Das Führungselement 36a weist eine runde Außenkontur auf. Die Außenkontur könnte auch eckig ausgebildet sein. Das Führungselement 36a weist eine runde Innenkontur auf. Der Außendurchmesser des Führungselements 36a ist sehr viel kleiner als die Länge des Führungselements 36a. Das Führungselement 36a ist rotationssymmetrisch ausgebildet. Die maximale Quererstreckung 30a der Koppeleinheit 22a erstreckt sich bis zu dem Außendurchmesser des Führungselements 36a. Das Führungselement 36a ist aus einem metallischen Werkstoff ausgebildet. Das Führungselement 36a ist aus dem gleichen Werkstoff wie das Anschlagelement 16a ausgebildet. Das Führungselement 36a ist aus dem gleichen Werkstoff wie das Anschlagaufnahmeelement 20a ausgebildet. Das Führungselement 36a ist unbeweglich in das Werkzeugspanngerät 78a eingebaut. Das Führungselement 36a ist fest mit dem Werkzeugspanngerät 78a verbunden. Das Führungselement 36a ist als Hülse in eine Ausnehmung des Werkzeugspanngerät 78a eingepresst. Das Führungselement 36a könnte als eine Bohrung ausgebildet sein. Das Anschlagaufnahmeelement 20a ist in das Führungselement 36a eingebracht. Das Anschlagaufnahmeelement 20a ist innerhalb des Führungselements 36a rotatorisch und/oder translatorisch bewegbar. Das Führungselement 36a ist dazu vorgesehen, eine Längsbewegung und/oder eine Rotationsbewegung des Anschlagaufnahmeelements 20a zu führen. Das Führungselement 36a weist eine radial innenliegende Koppelmulde 38a auf. Die Koppelmulde 38a erlaubt ein zumindest temporäres Ausweichen des Formschlusselements 32a während einem Einkoppeln und/oder einem Entkoppeln des Anschlagelements 16a mit dem Anschlagaufnahmeelement 20a. Die Koppelmulde 38a ist entlang des Umfangs des Führungselements 36a umlaufend ausgebildet. Die Koppelmulde 38a ist in der Wechselposition der Koppeleinheit 22a auf Höhe der Koppelausnehmungen 24a / in Überlapp mit den Koppelausnehmungen 24a angeordnet. Die Koppelmulde 38a ist in der Fixierposition der Koppeleinheit 22a oberhalb der Koppelausnehmungen 24a angeordnet. Die Koppelmulde 38a ist in sich geschlossen ausgebildet. Die Koppelmulde 38a ist entlang der Längsachse 28a asymmetrisch ausgebildet. Die Koppelmulde 38a ist in eine Einkoppelrichtung 40a schräg zulaufend ausgebildet. Die schräg zulaufende Koppelmulde 38a ist dazu vorgesehen, bei einem Ein- und Auskoppeln ein Bewegen der Formschlusselemente 32a entlang der Längsachse 28a sicherzustellen. Die Formschlusselemente 32a sind im entkoppeltem Zustand 68a zumindest teilweise in der Koppelmulde 38a angeordnet.

Die Längeneinstellvorrichtung 72a weist ein Verschlusselement 44a auf. Das Verschlusselement 44a weist eine zylindrische Form auf. Das Verschlusselement 44a ist rotationssymmetrisch ausgebildet. Das Verschlusselement 44a ist in der Aufnahmeausnehmung 42a des Anschlagaufnahmeelements 20a längsbeweglich gelagert. Das Verschlusselement 44a ist in dem Anschlagaufnahmeelement 20a rotierbar gelagert. Das Verschlusselement 44a ist dazu vorgesehen, in einem entkoppelten Zustand 68a die Formschlusselemente 32a verliersicher zu positionieren. Das Verschlusselement 44a ist dazu vorgesehen ist, bei einem Einkoppelvorgang zwischen dem Anschlagelement 16a und dem Anschlagaufnahmeelement 20a das Formschlusselement 32a für einen Eingriff mit dem Anschlagelement 16a zur Herstellung der Formschluss-Kopplung freizugeben. Das Verschlusselement 44a ist dazu vorgesehen, von dem Anschlagelement 16a betätigt zu werden. Die Formschlusselemente 36a sind in entkoppeltem Zustand 68a zwischen dem Führungselement 36a und dem Verschlusselement 44a angeordnet. Die Formschlusselemente 32a sind in dem gekoppeltem Zustand 70a zwischen dem Führungselement 36a und dem Anschlagelement 16a angeordnet.

Die Längeneinstellvorrichtung 72a weist ein Rückstellelement 46a auf. Das Rückstellelement 46a ist dazu vorgesehen, bei einem Entkoppelvorgang das Formschlusselement 32a, insbesondere mittels des Verschlusselements 44a, in eine einkoppelbereite Ausgangslage zurückzustellen. Die einkoppelbereite Ausgangslage entspricht dem gekoppelten Zustand 70a. Das Rückstellelement 46a ist als eine Druckfeder ausgebildet. Die Druckfeder ist an einem Endbereich 48a der Aufnahmeausnehmung 42a des Anschlagaufnahmeelements 20a abgestützt. Die Federkraft der Druckfeder ist größer als die Gewichtskraft des Verschlusselements 44a. Es ist auch denkbar, dass die Rückstellbewegung durch einen, insbesondere pneumatischen und/oder hydraulischen, fluidischen Druck erfolgt.

Das Anschlagelement 16a weist eine Eingriffsmulde 50a auf. Die Eingriffsmulde 50a ist dazu vorgesehen, zu der Herstellung der Formschluss-Verbindung zwischen dem Anschlagelement 16a und dem Anschlagaufnahmeelement 20a einen Eingriff mit dem Formschlusselement 32a herzustellen. Das Anschlagelement 16a weist ein weiteres Formschlusselement 52a auf. Das weitere Formschlusselement 52a ist dazu vorgesehen, ein Drehmoment von dem Anschlagaufnahmeelement 20a aufzunehmen und/oder an das Anschlagaufnahmeelement 20a zu übertragen. Das weitere Formschlusselement 52a ist als ein Mehrkant, z.B. ein Außensechskant, ausgebildet. Das Anschlagelement 16a weist eine Kugelkappe 54a auf. Die Kugelkappe 54a ist an einem dem Anschlagaufnahmeelement 20a zugewandten Ende des Anschlagelements 16a angeordnet. Das Anschlagaufnahmeelement 20a ist rotationsbeweglich gelagert.

Die Figur 4 zeigt ein schematisches Ablaufdiagramm eines Verfahrens zu einer Koppelung von dem Anschlagelement 16a mit dem Anschlagaufnahmeelement 20a.

In einem Verfahrensschritt 56a wird das Anschlagelement 16a entlang der Längsachse 28a zu einem Herstellen oder Lösen der Kopplung zwischen dem Anschlagelement 16a und dem Anschlagaufnahmeelement 20a in einer Wechselposition 24a der Koppeleinheit 22a entnommen oder eingeführt. Die Einführung des Anschlagelements 16a in das Anschlagaufnahmeelement 20a wird mit einem Handhabungsroboter 66a durchgeführt. Alternativ kann die Einführung des Anschlagelements 16a in das Anschlagaufnahmeelement 20a auch von Hand durchgeführt werden. Während dem gesamten Einfuhrvorgang wird das Anschlagaufnahmeelement 20a um die Längsachse 28a rotiert.

In einem weiteren Verfahrensschritt 58a wird das Anschlagelement 16a an der Wechselposition 24a der Koppeleinheit 22a in Längsrichtung der Längeneinstellvorrichtung 72a nach unten bewegt. Die Wechselposition 24a entlang der Längsachse 28a ist ortsfest. Die Wechselposition 24a liegt oberhalb aller Fixierpositionen 26a. Das Formschlusselement 32a wird durch die schräg nach unten verlaufende Koppelmulde 38a radial nach innen gedrückt. Das Formschlusselement 32a wird in die Koppelausnehmung 34a eingeführt. Durch das nach innen gedrückte Formschlusselement 32a wird die Formschlussverbindung zwischen Anschlagelement 16a und Anschlagaufnahmeelement 20a hergestellt. Das Anschlagelement 16a und das Anschlagaufnahmeelement 20a werden in einem Koppelschritt (Verfahrensschritt 58a) an der ortsfesten Wechselposition 24a gekoppelt. Das Anschlagelement 16a und das Anschlagaufnahmeelement 20a werden fest miteinander gekoppelt. Die Fixierpositionen, 26a das Anschlagelement 16a und das Anschlagaufnahmeelement 20a sind zerstörungsfrei untrennbar miteinander verbunden.

In einem weiteren Verfahrensschritt 60a wird das mit dem Anschlagelement 16a verbundene Anschlagaufnahmeelement 20a zu der Längeneinstellbewegung des Werkzeugs 10a nach oben und nach unten bewegt. Das Anschlagelement 16a und das Anschlagaufnahmeelement 20a werden in einer Fixierposition 26a entlang der Längsachse 28a zu einer Längeneinstellung verschoben.

In einem weiteren Verfahrensschritt 62a wird das Anschlagelement 16a entlang der Längsachse 28a nach oben bewegt, bis mit der Koppeleinheit 22a die Wechselposition 24a erreicht wird.

In einem weiteren Verfahrensschritt 64a wird das Anschlagelement 16a nach oben bewegt. Dabei werden die Formschlusselemente 32a radial nach außen bewegt und die Formschlussverbindung wird freigegeben.

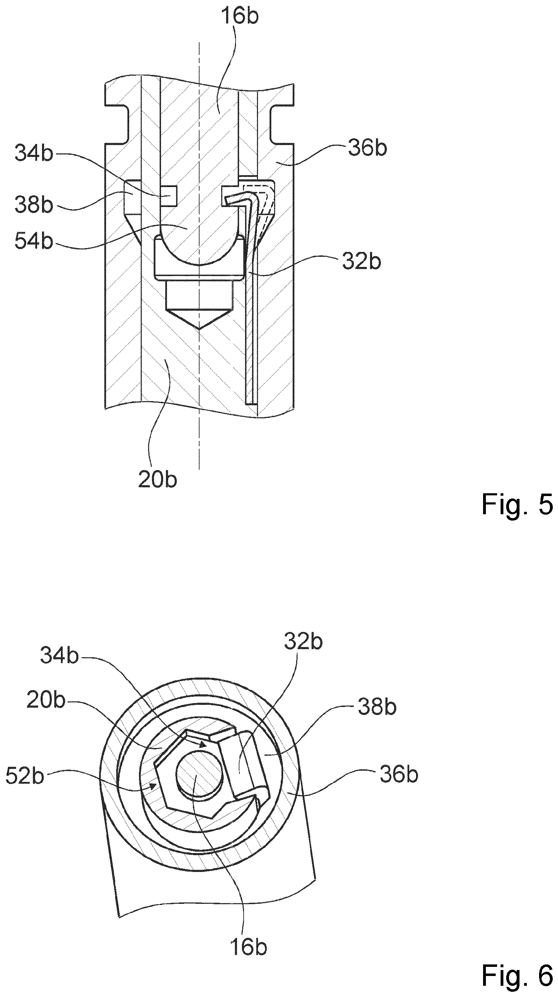

In den Figuren 5 bis 11 sind weitere Ausführungsbeispiele der Erfindung gezeigt. Die nachfolgende Beschreibung und die Zeichnung beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung des anderen Ausführungsbeispiels, insbesondere der Figuren 1 bis 4, verwiesen werden kann. Zur Unterscheidung der Ausführungsbeispiele ist der Buchstabe a den Bezugszeichen des Ausführungsbeispiels in den Figuren 1 bis 4 nachgestellt. In dem Ausführungsbeispiel der Figuren 5 bis 11 ist der Buchstabe a durch die Buchstaben b und c ersetzt.

Die Figur 5 zeigt eine schematische Schnittdarstellung einer alternativen Ausführungsform einer Längeneinstellvorrichtung 72b. Die Längeneinstellvorrichtung 72b ist in gekoppelten Zustand 70b abgebildet. Die Längeneinstellvorrichtung 72a weist ein Anschlagelement 16b auf. Die Längeneinstellvorrichtung 72b weist ein Anschlagaufnahmeelement 20b auf. Das Anschlagaufnahmeelement 20b weist eine Koppelausnehmung 34b auf. Das Anschlagaufnahmeelement 20b weist eine Aufnahmeausnehmung 42b auf. Das Anschlagelement 16b ist in der Aufnahmeausnehmung 42b des Anschlagaufnahmeelements 20b angeordnet. Die Längeneinstellvorrichtung 72a weist ein Führungselement 36b auf. Das Führungselement 36b weist eine Koppelmulde 38b auf. Die Koppelmulde 38b ist umlaufend ausgebildet. Das Anschlagaufnahmeelement 20b ist in dem Führungselement 36b angeordnet. Das Anschlagelement 16b ist in dem Führungselement 36b angeordnet. Die Längeneinstellvorrichtung 72b weist eine Koppeleinheit 22b auf. Die Koppeleinheit 22b weist ein Formschlusselement 32b auf. Das Formschlusselement 32b ist als Federhaken ausgebildet. Der Federhaken bildet mit dem Anschlagelement 16b einen Formschluss aus, vgl. Fig. 5. Der Federhaken greift in gekoppeltem Zustand 70b durch die Koppelausnehmung 34b hindurch. In gekoppeltem Zustand ist der Federhaken gespannt. In gekoppeltem Zustand 70b ist der Federhaken elastisch verformt. Die Koppelausnehmung 34b ist rechteckig ausgebildet. Die Koppelmulde 38b ist dazu vorgesehen, den Federhaken bei einem Entkoppeln des Anschlagelements 16b von dem Anschlagaufnahmeelement 20b aufzunehmen. Das gestrichelt dargestellte Formschlusselement 32b stellt den entkoppelten Zustand 68b des Formschlusselements 32b dar.

Die Figur 6 zeigt eine Schnittdarstellung von einem Schnitt in Querrichtung der Längeneinstellvorrichtung 72b. Die Längeneinstellvorrichtung 72b weist ein Führungselement 36b auf. Die Längeneinstellvorrichtung 72b weist ein Anschlagaufnahmeelement 20b auf. Das Anschlagaufnahmeelement 20b ist in dem Führungselement 36b angeordnet. Das Anschlagaufnahmeelement 20b ist in dem Führungselement 36b längs- und/oder rotationsbeweglich gelagert. Die Längeneinstellvorrichtung 72b weist ein Anschlagelement 16b auf. Das Anschlagelement 16b ist in dem Anschlagaufnahmeelement 20b angeordnet. Das Anschlagelement 16b weist ein weiteres Formschlusselement 52b auf. Das weitere Formschlusselement 52b ist als Außensechskant ausgebildet. Das Anschlagaufnahmeelement 20b weist einen Innensechskant auf. Das Anschlagelement 16b und das Anschlagaufnahmeelement 20b bilden eine Formschlussverbindung. Die Längeneinstellvorrichtung 72b weist eine Koppeleinheit 22b auf. Die Koppeleinheit 22b ist in gekoppeltem Zustand 70b dargestellt. Die Koppeleinheit 22b weist ein Formschlusselement 32b auf. Die Koppeleinheit 22b weist eine Koppelausnehmung 34b auf. Das Formschlusselement 32b greift in die Koppelausnehmung 34b ein. Die Koppelausnehmung 34b weist die gleiche geometrische Form auf wie das Formschlusselement 32b.

Das Führungselement 36b weist eine Koppelmulde 38b auf. Die Koppelmulde 38b ist dazu vorgesehen, in einem entkoppelten Zustand 68b das Formschlusselement 32b aufzunehmen.

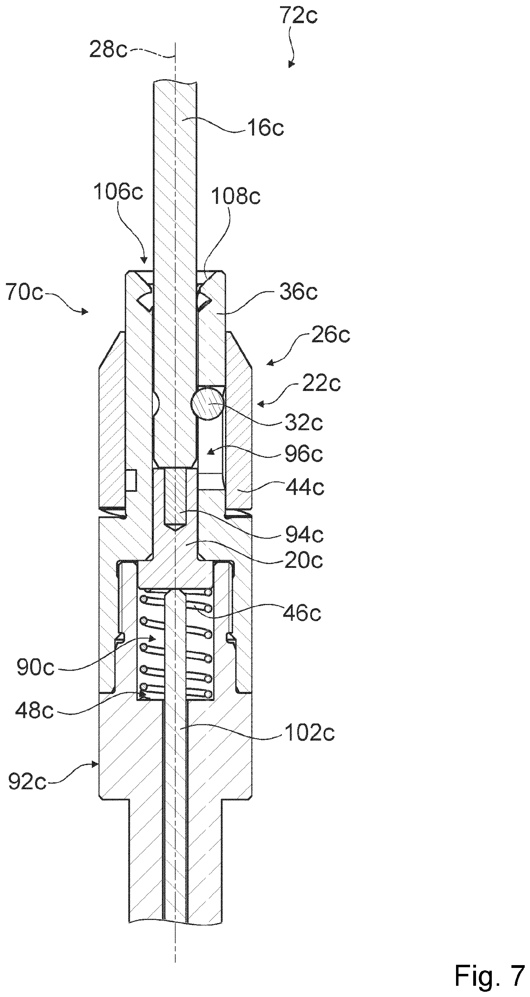

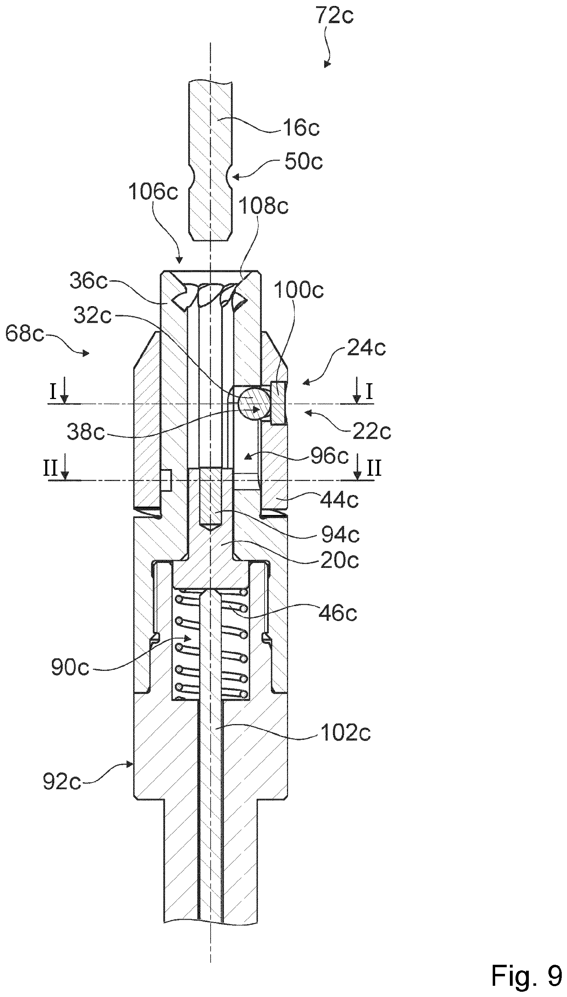

Die Figur 7 zeigt eine schematische vertikale Schnittansicht eines Teils einer weiteren alternativen Längeneinstellvorrichtung 72c. Die weitere alternative Längeneinstellvorrichtung 72c ist in einem gekoppelten Zustand 70c dargestellt. Die weitere alternative Längeneinstellvorrichtung 72c weist ein wechselbares Anschlagelement 16c auf. Das Anschlagelement 16c ist aus einem magnetischen Material, beispielsweise einem magnetischen Stahl, ausgebildet. Die Längeneinstellvorrichtung 72c weist ein Anschlagaufnahmeelement 20c auf. Das Anschlagaufnahmeelement 20c ist längsbeweglich gelagert. Das Anschlagaufnahmeelement 20c ist rotierbar gelagert. Das Anschlagaufnahmeelement 20c bildet einen Anschlag für das Anschlagelement 16c aus. Das Anschlagaufnahmeelement 20c ist zu einer Kopplung mit dem Anschlagelement 16c vorgesehen. Das Anschlagaufnahmeelement 20c weist ein Magnetelement 94c auf. Das Anschlagaufnahmeelement 20c ist zu einer magnetischen Kopplung mit dem Anschlagelement 16c vorgesehen. Das Magnetelement 94c des Anschlagaufnahmeelements 20c wirkt eine magnetische Anziehungskraft auf das Anschlagelement 16c aus. Durch die Kopplung sind das Anschlagaufnahmeelement 20c und das Anschlagelement 16c im gekoppelten Zustand 70c lediglich gemeinsam bewegbar. In dem gekoppelten Zustand 70c sind das Anschlagelement 16c und das Anschlagaufnahmeelement 20c bewegungsgebunden. In einem entkoppelten Zustand 68c hingegen (vgl. Fig. 9) sind das Anschlagelement 16c und das Anschlagaufnahmeelement 20c zueinander relativbeweglich und/oder relativ zueinander rotierbar. Das Anschlagaufnahmeelement 20c ist in diesem Ausführungsbeispiel frei von einer Aufnahmeausnehmung zur Aufnahme des Anschlagelements 16c ausgebildet. Das Anschlagaufnahmeelement 20c ist angetrieben längsbewegbar. Die weitere alternative Längeneinstellvorrichtung 72c weist eine Basisstange 92c auf. Die Basisstange 92c ist rotationsbeweglich gelagert. Die Basisstange 92c weist einen Pin 102c auf. Der Pin 102c ist längsbeweglich gelagert. Das Anschlagaufnahmeelement 20c liegt an dem Pin 102c der Basisstange 92c an. Die Basisstange 92c, insbesondere der Pin 102c der Basisstange 92c, lagert das Anschlagaufnahmeelement 20c. Der Pin 102c der Basisstange 92c ist dazu vorgesehen, eine Längsbewegung auf das Anschlagaufnahmeelement 20c und damit im gekoppelten Zustand 70c auch auf das Anschlagelement 16c zu übertragen / auszuüben. Der Pin 102c der Basisstange 92c schiebt das Anschlagaufnahmeelement 20c in einer das Anschlagaufnahmeelement 20c lagernden Ausnehmung der Längeneinstellvorrichtung 72c auf und ab. Ein die Längeneinstellvorrichtung 72c umfassendes Werkzeugspanngerät 78c weist eine Antriebseinheit 76c (vgl. auch Fig. 1) auf, welche zumindest dazu vorgesehen ist, den Pin 102c der Basisstange 92c in Längsrichtung zu bewegen.

Die Längeneinstellvorrichtung 72c weist eine Koppeleinheit 22c auf. Die Längeneinstellvorrichtung 72c weist ein Führungselement 36c auf. Das Führungselement 36c ist zu einer Führung des Anschlagelements 16c beim Einkoppelvorgang oder beim Entkoppelvorgang oder bei der Längeneinstellung vorgesehen. Das Führungselement 36c ist als ein Hohlkörper ausgebildet. Das Führungselement 36c ist unbeweglich in das Werkzeugspanngerät 78c eingebaut. Das Anschlagaufnahmeelement 20c ist in das Führungselement 36c eingebracht. Das Anschlagaufnahmeelement 20c ist innerhalb des Führungselements 36c translatorisch bewegbar. Das Führungselement 36c ist dazu vorgesehen, eine Längsbewegung des Anschlagaufnahmeelements 20c zu führen. Die Koppeleinheit 22c ist zu einer lösbaren Kopplung zwischen dem Anschlagelement 16c und dem Führungselement 36c vorgesehen. Die Koppeleinheit 22c ist zu einer lösbaren Kopplung zwischen dem Anschlagelement 16c und dem Führungselement 36c zumindest in Radialrichtung vorgesehen. Die Koppeleinheit 22c ist zu einer Erzeugung einer teilweisen Formschluss-Kopplung zwischen dem Anschlagelement 16c und dem Führungselement 36c vorgesehen. Das Führungselement 36c ist zur Aufnahme des Anschlagelements 16c vorgesehen. Das Führungselement 36c weist eine Einführöffnung 106c auf, in die das Anschlagelement 16c eingeführt werden kann. Die Einführöffnung 106c umfasst einen Innensechskant. Die Einführöffnung 106c weist eine Einführfase 108c zur Erleichterung des Einführens des Anschlagelements 16c auf.

Die Koppeleinheit 22c bildet eine Wechselposition 24c aus (vgl. Fig. 9). Die Koppeleinheit 22c bildet entlang einer Längsachse 28c der Längeneinstellvorrichtung 72c genau eine Wechselposition 24c aus. In der Wechselposition 24c ist eine Entnahme des Anschlagelements 16c möglich, insbesondere ohne großen Kraftaufwand und zerstörungsfrei. In der Wechselposition 24c ist ein Einführen des Anschlagelements 16c möglich, insbesondere ohne großen Kraftaufwand und zerstörungsfrei. Die Wechselposition 24c ist zu einem Herstellen oder Lösen der Kopplung zwischen dem Anschlagelement 16c und dem Führungselement 36c vorgesehen. Die Wechselposition 24c ist entlang der Längsachse 28c ortsfest. Die Koppeleinheit 22c weist ein Formschlusselement 32c auf. Das Formschlusselement 32c ist als eine Kugel ausgebildet. Das Formschlusselement 32c ist dazu vorgesehen, eine teilweise formschlüssige Verbindung zwischen dem Anschlagelement 16c und dem Führungselement 36c herzustellen. In der Wechselposition 24c kann das Formschlusselement 32c radial zu dem Anschlagelement 16c bzw. zu einer das Anschlagelement 16c im gekoppelten Zustand 70c aufnehmenden Öffnung, insbesondere des Führungselements 36c, ausweichen. Das Ausweichen der Formschlusselemente 32c ist dazu vorgesehen, das Anschlagelement 16c freizugeben. Das Führungselement 36c weist eine Fixierungsausnehmung 96c auf. Die Fixierungsausnehmung 96c ist entlang der Längsachse 28c erstreckt

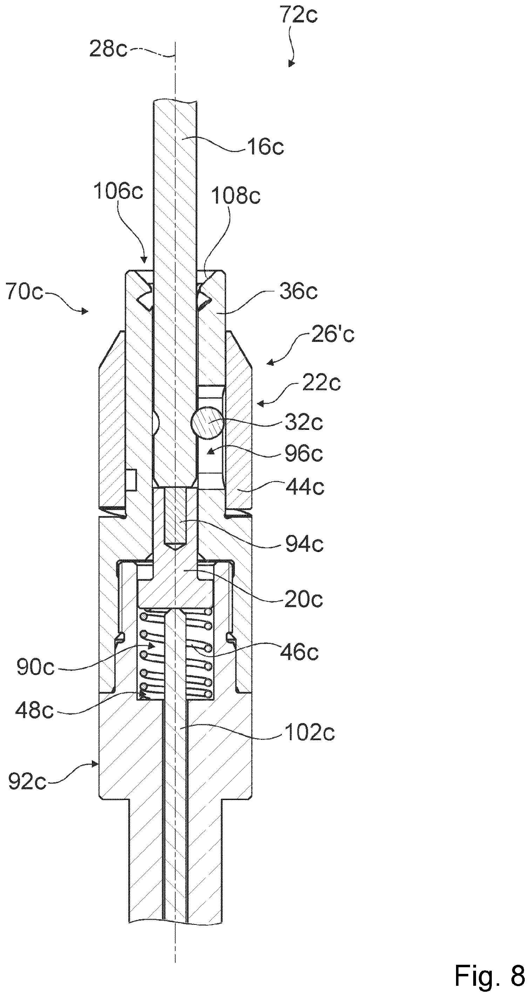

Die Koppeleinheit 22c bildet eine erste Fixierposition 26c aus (vgl. Fig. 7). Die Koppeleinheit 22c bildet eine zweite Fixierposition 26'c aus (vgl. Fig. 8). Die Koppeleinheit 22c bildet entlang der Längsachse 28c eine Vielzahl an Fixierpositionen 26c aus. In der Fixierposition 26c, 26'c sind das Anschlagelement 16c und das Anschlagaufnahmeelement 20c translationsfest miteinander gekoppelt. Die Fixierposition 26c, 26'c ist entlang der Längsachse 28c verschiebbar. Alle möglichen Fixierpositionen 26'c mit Ausnahme der ersten Fixierposition 26c entlang der Längsachse 28c sind (von der Werkzeugaufnahme 14c aus gesehen) vollständig unterhalb der Wechselposition 24c angeordnet. Die erste Fixierposition 26c ist positionsgleich mit der Wechselposition 24c angeordnet. In den Fixierpositionen 26c ist keine Bewegung des Formschlusselements 32c radial zu dem Anschlagelement 16c bzw. zu einer das Anschlagelement 16c im gekoppelten Zustand 70c aufnehmenden Aufnahmeausnehmung 90c der Basisstange 92c möglich.

Die Längeneinstellvorrichtung 72c weist ein Verschlusselement 44c auf. Das Verschlusselement 44c ist rohrförmig / ringförmig. Das Verschlusselement 44c umgreift das Führungselement 36c an dessen Außenumfang. Das Verschlusselement 44c ist drehbeweglich gelagert. Das Verschlusselement 44c ist rund um das Führungselement 36c drehbeweglich gelagert. Das Verschlusselement 44c ist an seinem Außenumfang für einen Roboter oder einen Bediener greifbar. Das Verschlusselement 44c ist entlang der Längsachse 28c unbeweglich. Das Verschlusselement 44c ist dazu vorgesehen, in einem entkoppelten Zustand 68c der Längeneinstellvorrichtung 72c das Formschlusselement 32c verliersicher zu positionieren. Das Verschlusselement 44c ist dazu vorgesehen ist, bei einem Einkoppelvorgang zwischen dem Anschlagelement 16c und dem Führungselement 36c / bei einer Fixierung des Anschlagelements 16c in der Längeneinstellvorrichtung 72c das Formschlusselement 32c für einen Eingriff mit dem Anschlagelement 16c zur Herstellung der teilweisen Formschluss-Kopplung freizugeben. Das Verschlusselement 44c ist dazu vorgesehen, extern betätigt zu werden.

Das Verschlusselement 44c weist eine radial innenliegende Koppelmulde 38c auf. Die Koppelmulde 38c erlaubt ein zumindest temporäres Ausweichen des Formschlusselements 32c während einem Einkoppeln und/oder einem Entkoppeln des Anschlagelements 16c. Die Koppelmulde 38c ist auf Höhe der Koppelausnehmungen 24c angeordnet. Die Koppelmulde 38c ist derart in dem drehbeweglich gelagerten Verschlusselement 44c angeordnet, dass sie durch eine Drehbewegung des Verschlusselements 44c wahlweise in einen zumindest teilweisen Überlapp mit der Fixierungsausnehmung 96c des Führungselements 36c (vgl. Fig. 9) gebracht werden kann oder außer Überlapp mit der Fixierungsausnehmung 96c gebracht werden kann (vgl. Fig. 7 oder 8). Die Koppelmulde 38c ist in allen Fixierpositionen 26'c außer der ersten Fixierposition 26c oberhalb des Formschlusselements 34c angeordnet. Die Koppelmulde 38a ist entlang einer Umfangsrichtung 98c des Verschlusselements 44c asymmetrisch ausgebildet. Die Koppelmulde 38c ist in der Umfangsrichtung 98c schräg zulaufend ausgebildet. Die schräg zulaufende Koppelmulde 38c ist dazu vorgesehen, bei einem Ein- und Auskoppeln des Anschlagelements 16c ein Bewegen der Formschlusselemente 32c in Radialrichtung sicherzustellen. Die Formschlusselemente 32c sind lediglich im entkoppelten Zustand 68c zumindest teilweise in der Koppelmulde 38c angeordnet. Das Verschlusselement 44c weist ein Permanentmagnetelement 100c auf. Das Permanentmagnetelement 100c ist zu einer verliersicheren Positionierung des Formschlusselements 32c in dem entkoppelten Zustand 68c vorgesehen. Das Permanentmagnetelement 100c ist in der Koppelmulde 38c angeordnet. Das Permanentmagnetelement 100c ist an einer Innenwand der Koppelmulde 38c angeordnet oder bildet diese zumindest teilweise aus. Das Formschlusselement 32c ist als eine magnetische Kugel, z.B. eine magnetische Stahlkugel ausgebildet, welche mit dem Permanentmagnetelement 100c magnetisch wechselwirken kann, insbesondere von dem Permanentmagnetelement 100c magnetisch angezogen wird.

Die Längeneinstellvorrichtung 72c weist ein Rückstellelement 46c auf. Das Rückstellelement 46c ist dazu vorgesehen, bei einem Entkoppelvorgang das Anschlagaufnahmeelement 20c in eine einkoppelbereite Ausgangslage zurückzustellen. Das Anschlagaufnahmeelement 20c bildet ein an dem Rückstellelement 46c abgestütztes Federdruckstück aus. Das Rückstellelement 46c ist dazu vorgesehen, das Anschlagaufnahmeelement 20c im entkoppelten Zustand 68c in eine oberste Position zurückzustellen, wie sie in der Fig. 9 dargestellt ist. Eine Verschiebung des Anschlagelements 16c aus der ersten Fixierposition 26c in eine der weiteren Fixierpositionen 26'c erzeugt ein Spannen des Rückstellelements 46c und/oder ein Einschieben des Anschlagaufnahmeelements 20c in die Aufnahmeausnehmung 90c der Basisstange 92c (vgl. Fig. 8). Das Rückstellelement 46c ist als eine Druckfeder ausgebildet. Die Druckfeder ist an einem Endbereich 48c der Aufnahmeausnehmung 90c der Basisstange 92c abgestützt. Die Druckfeder ist an dem Anschlagaufnahmeelement 20c abgestützt.

In den Figuren 7 und 8, in denen die Koppelmulde 38c des Verschlusselements 44c nicht mit der Fixierungsausnehmung 96c des Führungselements 36c überlappt, ist das Verschlusselement 44c in einer anderen Drehlage dargestellt als in der Figur 9, in welcher die Koppelmulde 38c des Verschlusselements 44c mit der Fixierungsausnehmung 96c des Führungselements 36c überlappt.

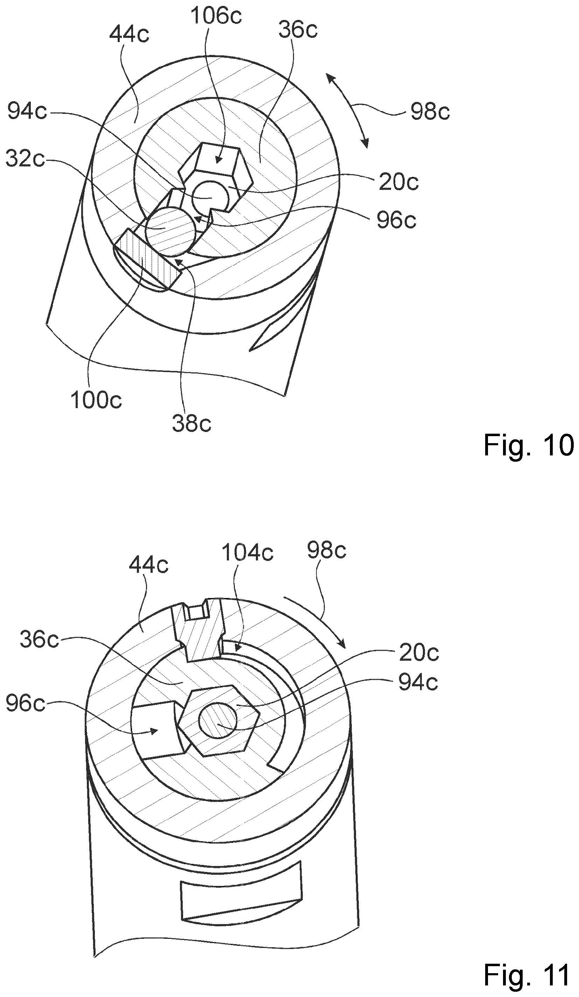

Die Figur 10 zeigt eine schematische Schnittdarstellung in Querrichtung der weiteren alternativen Längeneinstellvorrichtung 72c im entkoppelten Zustand 68c entlang der in der

Fig. 7 angedeuteten Schnittachse I, welche die weitere alternative Längeneinstellvorrichtung 72c im Bereich der Koppelmulde 38c schneidet. Das Formschlusselement 32c ist teilweise in der Koppelmulde 38c des Verschlusselements 44c angeordnet und teilweise in der Fixierungsausnehmung 96c des Führungselements 36c. Das Formschlusselement 32c haftet magnetisch an dem Permanentmagnetelement 100c des Verschlusselements 44c. Wenn nun ein Anschlagelement 16c eingesetzt werden würde, würde das Formschlusselement 32c keine Fixierwirkung auf das Anschlagelement 16c ausüben können. Wenn nun das Verschlusselement 44c entlang der Umfangsrichtung 98c verdreht werden würde, dann würde das Formschlusselement 32c aus der Koppelmulde 38c herausgeführt werden und im durch die Fixierungsausnehmung 96c gebildeten Zwischenraum zwischen dem Anschlagelement 16c und dem Verschlusselement 44c eingeklemmt werden.

Die Figur 11 zeigt eine schematische Schnittdarstellung in Querrichtung der weiteren alternativen Längeneinstellvorrichtung 72c im entkoppelten Zustand 68c entlang der in der Fig. 7 angedeuteten Schnittachse II, welche unterhalb der Schnittachse I liegt. Die Schnittachse II schneidet die weitere alternative Längeneinstellvorrichtung 72c im Bereich der Fixierungsausnehmung 96c unterhalb der Koppelmulde 38c. Die weitere alternative Längeneinstellvorrichtung 72c weist eine Drehbegrenzungseinrichtung 104c auf. Die Drehbegrenzungseinrichtung 104c begrenzt die relative Verdrehung zwischen dem Verschlusselement 44c und dem Führungselement 36c auf etwa 150°. Größere oder kleinere begrenzte Drehwinkelbereiche oder ein unbegrenzter Drehwinkelbereich sind selbstverständlich denkbar. Im dargestellten Fall umfasst die Drehbegrenzungseinrichtung 104c einen dem Verschlusselement 44c zugeordneten Pin, welcher in einer Nut des Führungselements 36c zwischen zwei Endanschlägen hin und her bewegt werden kann.

### Bezugszeichen

| | | | |
|---|---|---|---|
| 10 | Werkzeug | 62 | Verfahrensschritt |
| 12 | Werkzeugaufnahmeöffnung | 64 | Verfahrensschritt |
| 14 | Werkzeugaufnahme | 66 | Handhabungsroboter |
| 16 | Anschlagelement | 68 | entkoppelt |
| 18 | Längsposition | 70 | gekoppelt |
| 20 | Anschlagaufnahmeelement | 72 | Längeneinstellvorrichtung |
| 22 | Koppeleinheit | 74 | Fase |
| 24 | Wechselposition | 76 | Antriebseinheit |
| 26 | Fixierposition | 78 | Werkzeugspanngerät |
| 28 | Längsachse | 80 | Quererstreckung |
| 30 | Quererstreckung | 82 | Turm |
| 32 | Formschlusselement | 84 | Basisgestell |
| 34 | Koppelausnehmung | 86 | Induktionsspule |
| 36 | Führungselement | 88 | Schiene |
| 38 | Koppelmulde | 90 | Aufnahmeausnehmung |
| 40 | Einkoppelrichtung | 92 | Basisstange |
| 42 | Aufnahmeausnehmung | 94 | Magnetelement |
| 44 | Verschlusselement | 96 | Fixierungsausnehmung |
| 46 | Rückstellelement | 98 | Umfangsrichtung |
| 48 | Endbereich | 100 | Permanentmagnetelement |
| 50 | Eingriffsmulde | 102 | Pin |
| 52 | Formschlusselement | 104 | Drehbegrenzungseinrichtung |
| 54 | Kugelkappe | 106 | Einführöffnung |
| 56 | Verfahrensschritt | 108 | Einführfase |
| 58 | Verfahrensschritt | I | Schnittachse |
| 60 | Verfahrensschritt | II | Schnittachse |

## Patentansprüche

1. Längeneinstellvorrichtung (72a; 72b; 72c) zu einer Einstellung einer Längsposition (18a; 18b; 18c) eines Werkzeugs (10a; 10b; 10c) in einer Werkzeugaufnahmeöffnung (12a; 12b; 12c) einer Werkzeugaufnahme (14a; 14b; 14c), mit zumindest einem wechselbaren Anschlagelement (16a; 16b; 16c) zu einer mechanischen Festlegung der Längsposition (18a; 18b; 18c) des Werkzeugs (10a; 10b; 10c) in der Werkzeugaufnahmeöffnung (12a; 12b; 12c), mit einem längsbeweglich gelagerten Anschlagaufnahmeelement (20a; 20b; 20c) zu einer Aufnahme des Anschlagelements (16a; 16b; 16c), insbesondere mittels einer das Anschlagelement (16a; 16b) teilweise aufnehmenden Aufnahmeausnehmung (42a; 42b) oder mittels eines, eine anziehende magnetische Kraft auf das Anschlagelement (16c) auswirkenden Magnetelements (94c), und mit einer Koppeleinheit (22a; 22b; 22c), welche zu einer, insbesondere zumindest im Wesentlichen spielfreien, lösbaren Kopplung zwischen dem Anschlagelement (16a; 16b; 16c) und dem Anschlagaufnahmeelement (20a; 20b; 20c) entlang einer Längsachse (28a; 28b; 28c) der Längeneinstellvorrichtung (72a; 72b; 72c) vorgesehen ist, **dadurch gekennzeichnet, dass** die Koppeleinheit (22a; 22b; 22c) eine Wechselposition (24a; 24b; 24c), in welcher eine Entnahme und ein Einführen des Anschlagelements (16a; 16b; 16c) zu einem Herstellen oder Lösen der Kopplung zwischen dem Anschlagelement (16a; 16b; 16c) und dem Anschlagaufnahmeelement (20a; 20b; 20c) ermöglicht ist, und eine Fixierposition (26a; 26b), in welcher das Anschlagelement (16a; 16b; 16c) und Anschlagaufnahmeelement (20a, 20b; 20c) fest miteinander gekoppelt sind, aufweist, wobei die Wechselposition (24a; 24b, 24c) entlang der Längsachse (28a; 28b; 28c) ortsfest ist und wobei die Fixierposition (26a; 26b; 26c, 26'c) entlang der Längsachse (28a; 28b; 28c) verschiebbar ist.

2. Längeneinstellvorrichtung (72a; 72b) nach Anspruch 1, **dadurch gekennzeichnet, dass** alle möglichen Fixierpositionen (26a; 26b) entlang der Längsachse (28a; 28b) vollständig unterhalb der Wechselposition (24a; 24b) angeordnet sind, **und/oder dass** die Koppeleinheit (22a; 22b) zu einer Erzeugung einer Formschluss-Kopplung zwischen dem Anschlagelement (16a; 16b) und dem Anschlagaufnahmeelement (20a; 20b) bei dem Einführen des Anschlagelements (16a; 16b) in das Anschlagaufnahmeelement (20a; 20b) entlang der Längsachse (28a; 28b) vorgesehen ist.

3. Längeneinstellvorrichtung (72c) nach Anspruch 1, **dadurch gekennzeichnet, dass** eine von mehreren möglichen Fixierpositionen (26c, 26'c) entlang der Längsachse (28c) positionsgleich mit der Wechselposition (24c) angeordnet ist, **und/oder dass** die Längeneinstellvorrichtung (72c) ein Führungselement (36c) aufweist, welches zumindest dazu vorgesehen ist, eine Längsbewegung des Anschlagaufnahmeelements (20c) zu führen, wobei die Koppeleinheit (22c) zu einer Erzeugung einer Kopplung zwischen dem Anschlagelement (16c) und dem Führungselement (36c) vorgesehen ist.

4. Längeneinstellvorrichtung (72a; 72b; 72c) nach einem der vorhergehenden Ansprüche, **dadurch gekennzeichnet, dass** die Koppeleinheit (22a; 22b; 22c) eine maximale Quererstreckung (30a; 30b; 20c) von höchstens einem 1,5-fachen, vorzugsweise höchstens einem 1,25-fachen, einer maximalen Quererstreckung (80a; 80b; 80c) des Anschlagelements (16a; 16b; 16c) und/oder von höchstens 8 mm aufweist.

5. Längeneinstellvorrichtung (72a; 72b; 72c) nach einem der vorhergehenden Ansprüche, **dadurch gekennzeichnet, dass** die Koppeleinheit (22a; 22b; 22c) zumindest ein getrennt von dem Anschlagelement (16a; 16b; 16c) und getrennt von dem Anschlagaufnahmeelement (20a; 20b; 20c) ausgebildetes Formschlusselement (32a; 32b; 32c) aufweist, welches zumindest dazu vorgesehen ist, eine formschlüssige Verbindung zu einer zumindest teilweisen Formschluss-Kopplung zwischen dem Anschlagelement (16a; 16b; 16c) und dem Anschlagaufnahmeelement (20a; 20b; 20c) herzustellen, wobei das Formschlusselement (32a; 32b; 32c) vorzugsweise als Kugel oder als Federhaken ausgebildet ist und/oder wobei das Anschlagaufnahmeelement (20a; 20b) vorzugsweise zumindest eine Koppelausnehmung (34a; 34b) zur zumindest teilweisen Aufnahme des Formschlusselements (32a; 32b), insbesondere in einem gekoppelten und in einem entkoppelten Zustand (68a; 68b; 70a; 70b) der Koppeleinheit (22a; 22b), aufweist.

6. Längeneinstellvorrichtung (72a; 72b; 72c) nach einem der vorhergehenden Ansprüche, **gekennzeichnet durch** ein Führungselement (36a; 36b; 36c), welches dazu vorgesehen ist, eine Längsbewegung und/oder eine Rotationsbewegung des Anschlagaufnahmeelements (20a; 20b; 20c) zu führen, und/oder **dadurch gekennzeichnet, dass** das Anschlagaufnahmeelement (20a; 20b) und/oder eine das Anschlagaufnahmeelement (20c) lagernde Basisstange (92c) rotationsbeweglich gelagert ist.

7. Längeneinstellvorrichtung (72c) nach den Ansprüchen 5 und 6, **dadurch gekennzeichnet, dass** das Führungselement (36c) eine entlang der Längsachse (28c) erstreckte Fixierungsausnehmung (96c) aufweist, in welcher das Formschlusselement (32c) bei einem Verschieben der momentanen Fixierposition (26c, 26'c) axial bewegt werden kann, **und/oder dass** das Führungselement (36a; 36b) oder das drehbeweglich gelagerte Verschlusselement (44c) eine, insbesondere radial innenliegende, Koppelmulde (38a; 38b; 38c) aufweist, die ein zumindest temporäres Ausweichen des Formschlusselements (32a; 32b; 32c) zumindest während einem Einkoppeln und/oder einem Entkoppeln des Anschlagelements (16a; 16b; 16c), insbesondere mit dem Anschlagaufnahmeelement (20a; 20b; 20c), erlaubt, wobei die Koppelmulde (38a; 38b; 38c) vorzugsweise zumindest in eine Einkoppelrichtung (40a; 40b; 40c) oder zumindest in eine Umfangsrichtung (98c) schräg zulaufend ausgebildet ist.

8. Längeneinstellvorrichtung (72a; 72b; 72c) nach einem der vorhergehenden Ansprüche, **gekennzeichnet durch** ein in einer Aufnahmeausnehmung (42a; 42b) des Anschlagaufnahmeelements (20a; 20b) längsbeweglich gelagertes Verschlusselement (44a; 44b) **oder durch** ein rund um ein Führungselement (36c) der Längeneinstellvorrichtung (72c) drehbeweglich gelagertes Verschlusselement (44c), wobei das Führungselement (32c) zumindest dazu vorgesehen ist, eine Längsbewegung des Anschlagaufnahmeelements (20c) zu führen.

9. Längeneinstellvorrichtung (72c) nach Anspruch 7, **dadurch gekennzeichnet, dass** die Koppelmulde (38c) derart in dem drehbeweglich gelagerten Verschlusselement (44c) angeordnet ist, dass sie durch eine Drehbewegung des Verschlusselements (44c) wahlweise in einen zumindest teilweisen Überlapp mit einer Fixierungsausnehmung (96c) des Führungselements (36c) gebracht werden kann.

10. Längeneinstellvorrichtung (72a; 72b; 72c) nach Anspruch 5, **dadurch gekennzeichnet, dass** das Verschlusselement (44a; 44b; 44c) dazu vorgesehen ist, in einem entkoppelten Zustand (68a; 68b; 68c) das Formschlusselement (32a; 32b; 32c) verliersicher zu positionieren, wobei vorzugsweise das Verschlusselement (44c) ein Permanentmagnetelement (100c) aufweist, welches zu der verliersicheren Positionierung des Formschlusselements (32c) in dem entkoppelten Zustand (68c) vorgesehen ist, **und/oder dass** das Verschlusselement (44a; 44b; 44c) dazu vorgesehen ist, bei einem Einkoppelvorgang zwischen dem Anschlagelement (16a; 16b; 16c) und dem Anschlagaufnahmeelement (20a; 20b; 20c) das Formschlusselement (32a; 32b; 32c) für einen Eingriff mit dem Anschlagelement (16a; 16b; 16c) zur Herstellung einer zumindest teilweisen Formschluss-Kopplung freizugeben.

11. Längeneinstellvorrichtung (72a; 72b; 72c) zumindest nach Anspruch 5, **gekennzeichnet durch** ein Rückstellelement (46a; 46b; 46c), welches zumindest dazu vorgesehen ist, bei einem Entkoppelvorgang das Formschlusselement (32a; 32b), insbesondere mittels des Verschlusselements (44a; 44b), und/oder das Anschlagaufnahmeelement (20c) in eine einkoppelbereite Ausgangslage zurückzustellen, wobei vorzugsweise das Rückstellelement (46a; 46b; 46c) als eine an einem Endbereich (48a; 48b; 48c) einer Aufnahmeausnehmung (42a; 42b) des Anschlagaufnahmeelements (20a; 20b) und/oder einer Aufnahmeausnehmung (90c) einer das Anschlagaufnahmeelement (20c) lagernden Basisstange (92c) abgestützte Druckfeder ausgebildet ist, **und/oder dass** das Anschlagelement (16a; 16b; 16c) zumindest eine Eingriffsmulde (50a; 50b; 50c) aufweist, welche dazu vorgesehen ist, zu der Herstellung der Formschluss-Verbindung zwischen dem Anschlagelement (16a; 16b; 16c) und dem Anschlagaufnahmeelement (20a; 20b) oder dem Führungselement (36c) einen Eingriff mit dem Formschlusselement (32a; 32b; 32c) herzustellen.

12. Längeneinstellvorrichtung (72a; 72b) nach einem der vorhergehenden Ansprüche, **dadurch gekennzeichnet, dass** das Anschlagelement (16a; 16b) zumindest ein weiteres Formschlusselement (52a; 52b) aufweist, welches dazu vorgesehen ist, ein Drehmoment von dem Anschlagaufnahmeelement (20a; 20b) aufzunehmen und/oder an das Anschlagaufnahmeelement (20a; 20b) zu übertragen, **und/oder dass** das Anschlagelement (16a; 16b; 16c) auf einem dem Anschlagaufnahmeelement (20a; 20b; 20c) zugewandten Ende eine Kugelkappe (54a; 54b; 54c) aufweist.

13. Werkzeugspanngerät (78a; 78b; 78c), insbesondere Schrumpfspanngerät, mit einer Längeneinstellvorrichtung (72a; 72b; 72c) nach einem der vorhergehenden Ansprüche.

14. System mit einem Werkzeugspanngerät (78a; 78b; 78c) nach Anspruch 13, und mit einem Handhabungsroboter (66a; 66b; 66c), **dadurch gekennzeichnet, dass** der Handhabungsroboter (66a; 66b; 66c) zu einem automatisierten Wechsel des Anschlagelements (16a; 16b; 16c), insbesondere mittels einer reinen Linearbewegung, vorgesehen ist.

15. Verfahren zu einer Koppelung eines Anschlagelements (16a; 16b; 16c) mit einem Anschlagaufnahmeelement (20a; 20b; 20c) in einer Längeneinstellvorrichtung (72a; 72b; 72c) nach einem der Ansprüche 1 bis 12, wobei vorzugsweise
das Anschlagelement (16a; 16b) und das Anschlagaufnahmeelement (20a; 20b) in einem Koppelschritt an einer ortsfesten Wechselposition (24a; 24b) gekoppelt werden, welche oberhalb aller Fixierpositionen (26a; 26b) liegt, in welchen das Anschlagelement (16a; 16b) und das Anschlagaufnahmeelement (20a; 20b) zerstörungsfrei untrennbar miteinander verbunden sind
oder das Anschlagelement (16c) und das Anschlagaufnahmeelement (20c) in einem Koppelschritt an einer ortsfesten Wechselposition (24c) gekoppelt werden, welche axial positionsgleich mit einer von mehreren verschiedenen Fixierpositionen (26c, 26'c) liegt, in welchen das Anschlagelement (16c) und ein Führungselement (36c), welches zumindest dazu vorgesehen ist, eine Längsbewegung des Anschlagaufnahmeelements (20c) zu führen, zerstörungsfrei untrennbar miteinander verbunden sind.

## Claims

1. Length-adjustment device (72a; 72b; 72c) for an adjustment of a longitudinal position (18a; 18b; 18c) of a tool (10a; 10b; 10c) in a tool-receiving opening (12a; 12b; 12c) of a tool holder (14a; 14b; 14c),
with at least one exchangeable stop element (16a; 16b; 16c) for a mechanical fixing of the longitudinal position (18a; 18b; 18c) of the tool (10a; 10b; 10c) in the tool-receiving opening (12a; 12b; 12c),
with a stop receiving element (20a; 20b; 20c), supported in a longitudinally movable manner, for receiving the stop element (16a; 16b; 16c), in particular by means of a receiving recess (42a; 42b) which partially accommodates the stop element (16a; 16b) or by means of a magnet element (94c) which exerts an attracting magnetic force onto the stop element (16c), and
with a coupling unit (22a; 22b; 22c) configured for an, in particular at least substantially free-of-play, releasable coupling between the stop element (16a; 16b; 16c) and the stop receiving element (20a; 20b; 20c) along a longitudinal axis (28a; 28b; 28c) of the length-adjustment device (72a; 72b; 72c),
**characterized in that** the coupling unit (22a; 22b; 22c) has an exchange position (24a; 24b; 24c), in which a removal and an insertion of the stop element (16a; 16b; 16c) for creating or releasing the coupling between the stop element (16a; 16b; 16c) and the stop receiving element (20a; 20b; 20c) is enabled, and has a fixing position (26a; 26b), in which the stop element (16a; 16b; 16c) and the stop receiving element (20a, 20b; 20c) are fixedly coupled with each other,
wherein the exchange position (24a; 24b, 24c) is positionally fixed along the longitudinal axis (28a; 28b; 28c) and wherein the fixing position (26a; 26b; 26c, 26'c) is displaceable along the longitudinal axis (28a; 28b; 28c).

2. Length-adjustment device (72a; 72b) according to claim 1,
**characterized in that** all possible fixing positions (26a; 26b) are arranged along the longitudinal axis (28a; 28b) completely below the exchange position (24a; 24b),
**and/or that** the coupling unit (22a; 22b) is configured to create a form-fitting coupling between the stop element (16a; 16b) and the stop receiving element (20a; 20b) when the stop element (16a; 16b) is inserted into the stop receiving element (20a; 20b) along the longitudinal axis (28a; 28b).

3. Length-adjustment device (72c) according to claim 1,
**characterized in that** one of several possible fixing positions (26c, 26'c) is arranged along the longitudinal axis (28c) in a position that is identical to the exchange position (24c)
**and/or that** the length-adjustment device (72c) has a guide element (36c), which is configured at least for guiding a longitudinal movement of the stop receiving element (20c), the coupling unit (22c) being configured for creating a coupling between the stop element (16c) and the guide element (36c).

4. Length-adjustment device (72a; 72b; 72c) according to any one of the preceding claims,
**characterized in that** the coupling unit (22a; 22b; 22c) has a maximal transverse extent (30a; 30b; 20c) of at most 1.5 times, preferably at most 1.25 times, a maximal transverse extent (80a; 80b; 80c) of the stop element (16a; 16b; 16c), and/or of at most 8 mm.

5. Length-adjustment device (72a; 72b; 72c) according to any one of the preceding claims,
**characterized in that** the coupling unit (22a; 22b; 22c) comprises at least one form-fitting element (32a; 32b; 32c), which is realized separately from the stop element (16a; 16b; 16c) and separately from the stop receiving element (20a; 20b; 20c) and is configured at least for creating a form-fitting connection for an at least partially form-fitting coupling between the stop element (16a; 16b; 16c) and the stop receiving element (20a; 20b; 20c),
wherein the form-fitting element (32a; 32b; 32c) is preferably realized as a ball or as a spring hook,
and/or wherein the stop receiving element (20a; 20b) preferably has at least one coupling recess (34a; 34b) for at least partially receiving the form-fitting element (32a; 32b), in particular in a coupled state and in an uncoupled state (68a; 68b; 70a; 70b) of the coupling unit (22a; 22b)..

6. Length-adjustment device (72a; 72b; 72c) according to any one of the preceding claims,
**characterized by** a guide element (36a; 36b; 36c) configured for guiding a longitudinal movement and/or a rotational movement of the stop receiving element (20a; 20b; 20c),
and/or **characterized in that** the stop receiving element (20a; 20b) and/or a base rod (92c) that supports the stop receiving element (20c) is supported so as to be rotationally movable.

7. Length-adjustment device (72c) according to claims 5 and 6,
**characterized in that** the guide element (36c) has a fixing recess (96c), which extends along the longitudinal axis (28c) and in which the form-fitting element (32c) is axially movable when the instantaneous fixing position (26c, 26'c) is displaced,
**and/or that** the guide element (36a; 36b) or the rotationally-movably supported closure element (44c) comprises a coupling hollow (38a; 38b; 38c), which is in particular situated radially inside and which allows an at least temporary evasion of the form-fitting element (32a; 32b; 32c) at least during a coupling-in and/or an uncoupling of the stop element (16a; 16b; 16c), in particular with the stop receiving element (20a; 20b; 20c),
wherein the coupling hollow (38a; 38b; 38c) is preferably realized so as to taper obliquely at least in a coupling-in direction (40a; 40b; 40c) or at least in a circumferential direction (98c).

8. Length-adjustment device (72a; 72b; 72c) according to any one of the preceding claims,
**characterized by** a closure element (44a; 44b) which is supported so as to be longitudinally movable in a receiving recess (42a; 42b) of the stop receiving element (20a; 20b),
**or by** a closure element (44c) which is supported so as to be rotationally movable around a guide element (36c) of the length-adjustment device (72c), wherein the guide element (32c) is configured at least for guiding a longitudinal movement of the stop receiving element (20c).

9. Length-adjustment device (72c) according to claim 7,
**characterized in that** the coupling hollow (38c) is arranged in the rotationally-movably supported closure element (44c) in such a way that it can optionally be brought into an at least partial overlap with a fixing recess (96c) of the guide element (36c) by a rotational movement of the closure element (44c).

10. Length-adjustment device (72a; 72b; 72c) according to claim 5,
**characterized in that** the closure element (44a; 44b; 44c) is configured, in an uncoupled state (68a; 68b; 68c), to position the form-fitting element (32a; 32b; 32c) in a loss-proof manner,
wherein preferably the closure element (44c) comprises a permanent magnet element (100c) configured for the loss-proof positioning of the form-fitting element (32c) in the uncoupled state (68c)
**and/or that** the closure element (44a; 44b; 44c) is configured, during a coupling-in process between the stop element (16a; 16b; 16c) and the stop receiving element (20a; 20b; 20c), to release the form-fitting element (32a; 32b; 32c) for an engagement with the stop element (16a; 16b; 16c) such that an at least partially form-fitting coupling is created.

11. Length-adjustment device (72a; 72b; 72c) at least according to claim 5,
**characterized by** a reset element (46a; 46b; 46c), which is at least configured, during an uncoupling process, to reset the form-fitting element (32a; 32b), in particular by means of the closure element (44a; 44b), and/or to reset the stop receiving element (20c) into an initial position ready for coupling-in,
wherein preferably the reset element (46a; 46b; 46c) is realized as a compression spring which is supported at an end region (48a; 48b; 48c) of a receiving recess (42a; 42b) of the stop receiving element (20a; 20b) and/or at an end region (48a; 48b; 48c) of a receiving recess (90c) of a base rod (92c) that supports the stop receiving element (20c),
**and/or that** the stop element (16a; 16b; 16c) comprises at least one engagement hollow (50a; 50b; 50c), which is configured to bring about an engagement with the form-fitting element (32a; 32b; 32c) in order to create the form-fitting connection between the stop element (16a; 16b; 16c) and the stop receiving element (20a; 20b) or the guide element (36c).

12. Length-adjustment device (72a; 72b) according to any one of the preceding claims,
**characterized in that** the stop element (16a; 16b) comprises at least one further form-fitting element (52a; 52b) configured to receive a torque from the stop receiving element (20a; 20b) and/or to transmit a torque to the stop receiving element (20a; 20b),
**and/or that** the stop element (16a; 16b; 16c) has a spherical cap (54a; 54b; 54c) on an end facing towards the stop receiving element (20a; 20b; 20c).

13. Tool clamping apparatus (78a; 78b; 78c), in particular shrink-clamping apparatus, with a length-adjustment device (72a; 72b; 72c) according to any one of the preceding claims.

14. System with a tool clamping apparatus (78a; 78b; 78c) according to claim 13 and with a handling robot (66a; 66b; 66c),
**characterized in that** the handling robot (66a; 66b; 66c) is configured for an automated exchange of the stop element (16a; 16b; 16c), in particular by means of a purely linear movement.

15. Method for coupling a stop element (16a; 16b; 16c) with a stop receiving element (20a; 20b; 20c) in a length-adjustment device (72a; 72b; 72c) according to one of claims 1 to 12,
wherein preferably the stop element (16a; 16b) and the stop receiving element (20a; 20b) are in a coupling step coupled at a positionally fixed exchange position (24a; 24b) that is situated above all fixing positions (26a; 26b) in which the stop element (16a; 16b) and the stop receiving element (20a; 20b) are connected with each other such that they are not separable without destruction,
or the stop element (16c) and the stop receiving element (20c) are in a coupling step coupled at a positionally fixed exchange position (24c) that is situated axially in a position identical to one of several different fixing positions (26c, 26'c) in which the stop element (16c) and a guide element (36c), which is configured at least for guiding a longitudinal movement of the stop receiving element (20c), are connected with each other such that they are not separable without destruction.

## Revendications

1. Dispositif de réglage de longueur (72a ; 72b ; 72c) pour un réglage d'une position en longueur (18a ; 18b ; 18c) d'un outil (10a ; 10b ; 10c) dans une ouverture de logement d'outil (12a ; 12b ; 12c) d'un logement d'outil (14a ; 14b ; 14c),
avec au moins un élément de butée (16a ; 16b ; 16c) interchangeable pour une fixation mécanique de la position longitudinale (18a ; 18b ; 18c) de l'outil (10a ; 10b ; 10c) dans l'ouverture de logement d'outil (12a ; 12b ; 12c),
avec un élément de logement de butée (20a ; 20b ; 20c) supporté de manière déplaçable longitudinalement pour un logement de l'élément de butée (16a ; 16b ; 16c), en particulier moyennant un évidement de logement (42a ; 42b) qui partiellement reçoit l'élément de butée (16a ; 16b) ou moyennant un élément magnétique (94c) qui exerce une force magnétique attractive sur l'élément de butée (16c), et
avec une unité de couplage (22a ; 22b ; 22c) prévue pour un couplage démontable, en particulier un couplage démontable, au moins sensiblement sans jeu, entre l'élément de butée (16a ; 16b ; 16c) et l'élément de logement de butée (20a ; 20b ; 20c) le long d'un axe longitudinal (28a ; 28b ; 28c) du dispositif de réglage de longueur (72a ; 72b ; 72c),
**caractérisé en ce que** l'unité de couplage (22a ; 22b ; 22c) présente une position de rechange (24a ; 24b ; 24c) dans laquelle un enlèvement et une introduction de l'élément de butée (16a ; 16b ; 16c) sont rendus possibles pour créer ou démonter le couplage entre l'élément de butée (16a ; 16b ; 16c) et l'élément de logement de butée (20a ; 20b ; 20c), et présente une position de fixation (26a ; 26b) dans laquelle l'élément de butée (16a ; 16b ; 16c) et l'élément de logement de butée (20a ; 20b ; 20c) sont couplés fixement l'un avec l'autre,
où la position de rechange (24a ; 24b ; 24c) est stationnaire le long de l'axe longitudinal (28a ; 28b ; 28c) et où la position de fixation (26a ; 26b ; 26c, 26'c) est déplaçable le long de l'axe longitudinal (28a ; 28b ; 28c).

2. Dispositif de réglage de longueur (72a ; 72b) selon la revendication 1,
**caractérisé en ce que** toutes les positions de fixation (26a ; 26b) possibles sont disposées le long de l'axe longitudinal (28a ; 28b) complètement en dessous de la position de rechange (24a ; 24b),
**et/ou en ce que** l'unité de couplage (22a ; 22b) est conçue pour créer un couplage par forme entre l'élément de butée (16a ; 16b) et l'élément de logement de butée (20a ; 20b) lors de l'introduction de l'élément de butée (16a ; 16b) dans l'élément de logement de butée (20a ; 20b) le long de l'axe longitudinal (28a ; 28b).

3. Dispositif de réglage de longueur (72c) selon la revendication 1,
**caractérisé en ce que** l'une de plusieurs positions de fixation (26c, 26'c) possibles est disposée le long de l'axe longitudinal (28c) en position identique à la position de rechange (24c),
**et/ou que** le dispositif de réglage de longueur (72c) comprend un élément de guidage (36c) prévu au moins pour guider un mouvement longitudinal de l'élément de logement de butée (20c),
où l'unité de couplage (22c) est conçue pour créer un couplage entre l'élément de butée (16c) et l'élément de guidage (36c).

4. Dispositif de réglage de longueur (72a ; 72b ; 72c) selon l'une quelconque des revendications précédentes,
**caractérisé en ce que** l'unité de couplage (22a ; 22b ; 22c) présente une étendue transversale maximale (30a ; 30b ; 20c) d'au plus 1,5 fois, de préférence d'au plus 1,25 fois, une étendue transversale maximale (80a ; 80b ; 80c) de l'élément de butée (16a ; 16b ; 16c), et/ou d'au plus 8 mm.

5. Dispositif de réglage de longueur (72a ; 72b ; 72c) selon l'une quelconque des revendications précédentes,
**caractérisé en ce que** l'unité de couplage (22a ; 22b ; 22c) comprend au moins un élément à liaison par forme (32a ; 32b ; 32c) qui est réalisé séparément de l'élément de butée (16a ; 16b ; 16c) et séparément de l'élément de logement de butée (20a ; 20b ; 20c) et qui est conçu au moins pour établir une liaison par forme pour un couplage au moins partiellement par forme entre l'élément de butée (16a ; 16b ; 16c) et l'élément de logement de butée (20a ; 20b ; 20c),
où l'élément à liaison par forme (32a ; 32b ; 32c) est réalisé de préférence comme une sphère ou comme un crochet à ressort,
et/ou où l'élément de logement de butée (20a ; 20b) comprend de préférence au moins un évidement de couplage (34a ; 34b) pour le logement au moins partiel de l'élément à liaison par forme (32a ; 32b), en particulier dans un état couplé et dans un état découplé (68a ; 68b ; 70a ; 70b) de l'unité de couplage (22a ; 22b).

6. Dispositif de réglage de longueur (72a ; 72b ; 72c) selon l'une quelconque des revendications précédentes,
**caractérisé par** un élément de guidage (36a ; 36b ; 36c) conçu pour guider un mouvement longitudinal et/ou un mouvement rotatif de l'élément de logement de butée (20a ; 20b ; 20c),
et/ou **caractérisé en ce que** l'élément de logement de butée (20a ; 20b) et/ou une tige de base (92c) supportant l'élément de logement de butée (20c) est supporté de manière mobile en rotation.

7. Dispositif de réglage de longueur (72c) selon les revendications 5 et 6,
**caractérisé en ce que** l'élément de guidage (36c) comprend un évidement de fixation (96c) qui s'étend le long de l'axe longitudinal (28c) et dans lequel l'élément à liaison par forme (32c) peut être mu axialement lors d'un déplacement de la position de fixation instantanée (26c, 26'c),
**et/ou en ce que** l'élément de guidage (36a ; 36b) ou l'élément de fermeture (44c), qui est supporté de manière mobile en rotation, comprend un creux à couplage (38a ; 38b ; 38c), en particulier un creux à couplage (38a ; 38b ; 38c) situé radialement du dedans, qui permet un évitement au moins temporaire de l'élément à liaison par forme (32a ; 32b ; 32c) au moins pendant un couplage et/ou un découplage de l'élément de butée (16a ; 16b ; 16c), en particulier avec l'élément de logement de butée (20a ; 20b ; 20c),
où le creux de couplage (38a ; 38b ; 38c) est réalisé de préférence de telle manière qu'il se rajeunit obliquement au moins dans une direction de couplage (40a ; 40b ; 40c) ou au moins dans une direction circonférentielle (98c).

8. Dispositif de réglage de longueur (72a ; 72b ; 72c) selon l'une quelconque des revendications précédentes,
**caractérisé par** un élément de fermeture (44a ; 44b) supporté de manière mobile en longueur dans un évidement de logement (42a ; 42b) de l'élément de logement de butée (20a ; 20b)
ou par un élément de fermeture (44c) supporté de manière mobile en rotation autour d'un élément de guidage (36c) du dispositif de réglage de longueur (72c), l'élément de guidage (32c) étant prévu au moins pour guider un mouvement longitudinal de l'élément de logement de butée (20c).

9. Dispositif de réglage de longueur (72c) selon la revendication 7,
**caractérisé en ce que** le creux de couplage (38c) est disposé dans l'élément de fermeture (44c), qui est supporté de manière mobile en rotation, de telle manière qu'il peut être amené, par un mouvement rotatif de l'élément de fermeture (44c), optionnellement dans un chevauchement au moins partiel avec un évidement de fixation (96c) de l'élément de guidage (36c).

10. Dispositif de réglage de longueur (72a ; 72b ; 72c) selon la revendication 5,
**caractérisé en ce que** l'élément de fermeture (44a ; 44b ; 44c) est conçu, dans un état découplé (68a ; 68b ; 68c), pour positionner l'élément à liaison par forme (32a ; 32b ; 32c) de manière imperdable,
où de préférence l'élément de fermeture (44c) comprend un élément à aimant permanent (100c) prévu pour le positionnement imperdable de l'élément à liaison par forme (32c) dans l'état découplé (68c),
**et/ou que** l'élément de fermeture (44a ; 44b ; 44c) est conçu, lors d'un procès de couplage entre l'élément de butée (16a ; 16b ; 16c) et l'élément de logement de butée (20a ; 20b ; 20c), pour libérer l'élément à liaison par forme (32a ; 32b ; 32c) pour un engrènement avec l'élément de butée (16a ; 16b ; 16c) pour le but de créer un couplage au moins partiellement par forme.

11. Dispositif de réglage de longueur (72a ; 72b ; 72c) au moins selon la revendication 5,
**caractérisé par** un élément de rappel (46a ; 46b ; 46c) prévu au moins pour, lors d'un procès de découplage, ramener l'élément à liaison par forme (32a ; 32b), en particulier moyennant l'élément de fermeture (44a ; 44b), dans une position initiale prête au couplage, et/ou pour ramener l'élément de logement de butée (20c) dans une position initiale prête au couplage,
où de préférence l'élément de rappel (46a ; 46b ; 46c) est conçu comme un ressort de compression supporté sur une zone d'extrémité (48a ; 48b ; 48c) d'un évidement de logement (42a ; 42b) de l'élément de logement de butée (20a ; 20b) et/ou d'un évidement de logement (90c) d'une tige de base (92c) supportant l'élément de logement de butée (20c),
**et/ou que** l'élément de butée (16a ; 16b ; 16c) comprend au moins un creux d'engrènement (50a ; 50b ; 50c) conçu, afin de créer la liaison par forme entre l'élément de butée (16a ; 16b ; 16c) et l'élément de logement de butée (20a ; 20b) ou l'élément de guidage (36c), pour créer un engrènement avec l'élément à liaison par forme (32a ; 32b ; 32c) .

12. Dispositif de réglage de longueur (72a ; 72b) selon l'une quelconque des revendications précédentes,
**caractérisé en ce que** l'élément de butée (16a ; 16b) comprend au moins un autre élément à liaison par forme (52a ; 52b) conçu pour recevoir un couple de rotation de l'élément de logement de butée (20a ; 20b) et/ou pour transmettre un couple de rotation à l'élément de logement de butée (20a ; 20b),
**et/ou en ce que** l'élément de butée (16a ; 16b ; 16c) comprend un capuchon sphérique (54a ; 54b ; 54c) sur une extrémité tournée vers l'élément de logement de butée (20a ; 20b ; 20c).

13. Appareil de serrage d'outil (78a ; 78b ; 78c), en particulier appareil de serrage à rétrécissement,
avec un dispositif de réglage de longueur (72a ; 72b ; 72c) selon l'une quelconque des revendications précédentes.

14. Système avec un appareil de serrage d'outil (78a ; 78b ; 78c) selon la revendication 13, et avec un robot de manutention (66a ; 66b ; 66c),
**caractérisé en ce que** le robot de manutention (66a ; 66b ; 66c) est prévu pour un rechange automatisé de l'élément de butée (16a ; 16b ; 16c), en particulier au moyen d'un mouvement linéaire pur.

15. Procédé de couplage d'un élément de butée (16a ; 16b ; 16c) avec un élément de logement de butée (20a ; 20b ; 20c) dans un dispositif de réglage de longueur (72a ; 72b ; 72c) selon l'une quelconque des revendications 1 à 12,
où de préférence, dans une étape de couplage, l'élément de butée (16a ; 16b) et l'élément de logement de butée (20a ; 20b) sont couplés à une position de rechange stationnaire (24a ; 24b) située au-dessus de toutes les positions de fixation (26a ; 26b) dans lesquelles l'élément de butée (16a ; 16b) et l'élément de logement de butée (20a ; 20b) sont reliés l'un avec l'autre de manière inséparable sans destruction,
ou où, dans une étape de couplage, l'élément de butée (16c) et l'élément de logement de butée (20c) sont couplés à une position de rechange stationnaire (24c) située axialement en position identique à l'une de plusieurs positions de fixation différentes (26c, 26'c) dans lesquelles l'élément de butée (16c) et un élément de guidage (36c), qui est prévu au moins pour guider un mouvement longitudinal de l'élément de logement de butée (20c), sont reliés l'un avec l'autre de manière inséparable sans destruction.
